(19) Europäisches Patentamt / European Patent Office / Office européen des brevets

(11) **EP 3 749 896 B2**

(12) **NEW EUROPEAN PATENT SPECIFICATION**

After opposition procedure

(45) Date of publication and mention
of the opposition decision:
**08.05.2024 Bulletin 2024/19**

(45) Mention of the grant of the patent:
**08.12.2021 Bulletin 2021/49**

(21) Application number: **19708166.4**

(22) Date of filing: **05.02.2019**

(51) International Patent Classification (IPC):
**F23L 15/04** (2006.01)    **F23D 14/66** (2006.01)
**F23C 3/00** (2006.01)    **F23D 14/12** (2006.01)

(52) Cooperative Patent Classification (CPC):
**F23L 15/04; F23C 3/002; F23D 14/12; F23D 14/66;**
**Y02E 20/34**

(86) International application number:
**PCT/IB2019/050909**

(87) International publication number:
**WO 2019/155357 (15.08.2019 Gazette 2019/33)**

(54) **INDUSTRIAL RECUPERATIVE BURNER FOR INDUSTRIAL FURNACES**

**INDUSTRIELLER REKUPERATORBRENNER FÜR INDUSTRIEÖFEN**

**BRÛLEUR INDUSTRIEL À RÉCUPÉRATION POUR FOURS INDUSTRIELS**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.02.2018 IT 201800002472**

(43) Date of publication of application:
**16.12.2020 Bulletin 2020/51**

(73) Proprietor: **Tenova S.p.A.**
**20149 Milano (IT)**

(72) Inventors:
• **ASTESIANO, Davide**
**16147 Genova (IT)**
• **DELLA ROCCA, Alessandro**
**66054 Vasto (CH) (IT)**

(74) Representative: **Cosenza, Simona et al**
**Barzanò & Zanardo Milano S.p.A.**
**Via Borgonuovo, 10**
**20121 Milano (IT)**

(56) References cited:
**DE-A1- 1 551 761    JP-A- S61 280 309**
**US-A- 4 877 396**

EP 3 749 896 B2

**Description**

The present invention relates to an industrial recuperative burner that is equipped with its own heat recuperator and, for that reason, also called *"self-recuperative"*.

The recuperative (*"self-recuperative"*) burner according to the present invention can be used in all industrial processes and, in particular, in all iron and steel processes such as, for example, in iron and steel furnaces for heating or heat treating material.

The present invention relates, in particular, to a recuperative (self-recuperative) burner, which allows the comburent fluid and/or combustible fluid to be preheated through the heat of the combustion fumes generated by the combustion of the comburent fluid with the combustible fluid themselves.

With particular reference to the industrial burners used in iron and steel furnaces (whether for heating or treatment), it has for some time been known that the heat of combustion fumes is used to reduce fuel consumptions and increase the efficiency of the heating system.

For that purpose, different recovery systems are known for the recovery of the heat of combustion fumes in order to heat the comburent fluid and/or the combustible fluid prior to the combustion thereof.

Known recovery systems are divided into:

- centralised recovery systems and
- localised recovery systems.

Centralised recovery systems provide for the use of a heat exchanger arranged in the main extraction duct for the extraction of combustion fumes from the furnace, i.e. the duct that connects the chamber of the furnace, inside which the material to be heated and/or treated is contained, with the outlet of the combustion fumes (exhaust chimney).

Localised recovery systems provide for the use of a heat exchanger on board each burner installed in the furnace.

The use of one system, rather than the other, is a result of the choice to size the main fume extraction duct and the exhaust chimney thereof as a function of the maximum flow rate of all the fumes that are generated in the furnace (centralised recovery systems) or to equip the individual burners with their own combustion fume outlet ducts and related suction systems thereof (localised recovery systems).

In centralised recovery systems, the heat exchanger comprises a tube bundle-based or radiation-based heat exchanger, wherein the heat exchange between the flows of the two fluids circulating in the exchanger takes place through a separating wall of the two flows themselves, by convection (between fluids and separating wall) and conduction (of the separating wall). Generally, the heat exchanger is fed with all or a part of the flow of fumes generated in the furnace, which are used as a "heating fluid", and with all or part of the flow of comburent fluid, which constitutes the "fluid to be heated" or heated and that, once preheated, feeds the burners that equip the furnace.

Localised recovery systems, instead, can be distinguished into two types:

- systems in which the recovery of the heat of the fumes takes place through a heat exchanger and
- systems in which the recovery of the heat of the fumes takes place through a regenerator.

Both such localised recovery systems are combined and installed on board individual burners, the fumes being suctioned through them with the use of relevant forced draught systems (fans).

Localised recovery systems have some advantages with respect to centralised ones, but they also have some restrictions of use.

Localised recovery systems that equip individual burners ("self-recuperative") provide for the use of a heat exchanger which is, generally, comprised of two annular and concentric chambers that are separated from each other by a common wall and into which a stream of fluid to be heated or the heated fluid (comburent fluid) and a stream of heating fluid (fumes), respectively, flow in the same direction and with the same or opposite orientations. Therefore, these heat exchangers can be defined as "two-channel" exchangers, each of which channel comprises a respective annular chamber.

Localised recovery systems are also known in which each burner is equipped with a heat exchanger of the tube bundle type, as described, for example, in US2017067634, US2014262174 and US8622736.

In that case, the fluid to be heated (comburent fluid) flows into a plurality of tubes which are contained in a single chamber, the latter defining a single channel into which the heating fluid (fumes) flows.

Localised recovery systems that provide for the installation of a heat exchanger on board each burner have similar performance to that of centralised recovery systems and can preheat the fluid to be heated (comburent fluid) by using (recovering) the heat of the heating fluid (fumes) that is taken directly from the combustion chamber and, therefore, at high temperature.

However, on one hand, to obtain high heat exchange efficiencies, it is necessary to have a good ratio between the heat exchange surface and the flow rate of fluid to be heated: the higher such ratio, the greater the heat exchange efficiency and therefore the preheating of the fluid to be heated.

On the other hand, the dimensions of the heat exchanger are dictated by limits imposed by the spaces available for their installation on board the burner.

Such considerations have an effect on the flow rate restriction of the fluid to be heated (comburent fluid) and, therefore, on the power of the burner.

The lower the power of the burner, the easier it will be to reach high heat exchange efficiencies, the ratio between the heat exchange surface area and the flow rate of the fluid to be heated being high.

In other words, with the same heat exchange surface area, the higher the power and, therefore, the flow rate of fluid to be heated (comburent fluid), the lower the heat exchange efficiency.

For this reason, above a defined power threshold of the burner it is preferable to use localised regenerative recovery systems.

In fact, such systems use a so-called regenerator which is comprised of a matrix, generally made of ceramic material, which is alternatively crossed at deferred times by the heating fluid (fumes) and by the fluid to be heated (comburent fluid) . In a first step it is crossed by the heating fluid from which it detracts heat and stores it; in a second step it is crossed by the fluid to be heated to which it transfers the heat previously stored.

The use of ceramic materials allows heating fluids (fumes) to be used at high temperatures; this leads to high heating efficiency and high preheating temperatures of the fluid to be heated.

While in recovery systems that use heat exchangers, whether of the localised or centralised type, the heat exchange between the two fluids takes place "continuously"; in regenerative systems heat exchange takes place in an alternate and deferred manner over time.

To guarantee the continuity of the preheating process it is therefore necessary to install a pair of regenerators operating in parallel and a fluid flow regulation system for inverting the orientation of the fluids circulating in the two regenerators. When fully operational, in a first step the heating fluid flows through one of the two regenerators of the pair yielding energy thereto in the form of heat by heating it, while the fluid to be heated flows through the other one of the two regenerators of the pair from which it detracts the heat previously accumulated therein, cooling it. In a second step, the flows of the fluids crossing the two regenerators of the pair are inverted.

Localised regenerative recovery systems therefore have some restrictions of use. In the first place, they require the installation of two regenerators, each of which must be sized as a function of the maximum rated flow rates of the two fluids that cross them in an alternate manner. In the second place, they require the installation of regulation systems, which are generally provided with a plurality of switching valves configured and arranged to divert and invert the flow of the two fluids alternatively crossing the two regenerators.

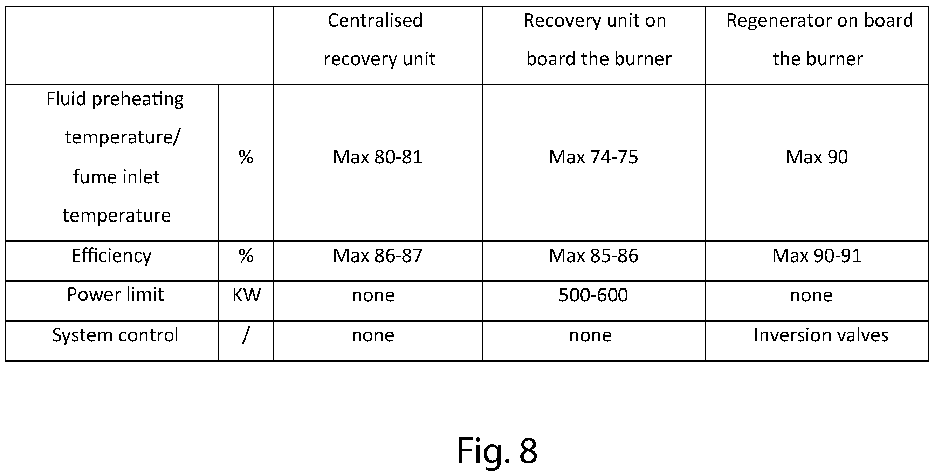

The choice of one recovery system rather than another is dictated by numerous factors, including the power of the burners, the available spaces, the heat exchange efficiency of the recuperator and the like. In the appended figure 8 a table is provided in which some parameters are indicated that characterise the different recovery systems: centralised recuperator, localised recuperator on board the burner and localised regenerator on board the burner. In particular, the efficiency of the self-recuperative burner with the following formula that relates the energy provided by the fuel with the energy that leaves the burner through the combustion fumes:

$$\mu = (1 - ((Q_{WG} * H_{WG}) / (PCI * Q_{comb}))) *100$$

Wherein:

PCI: Calorific power of the fuel [kcal/Nm$^3$]
$Q_{comb}$: Fuel flow rate [Nm$^3$/h]
$H_{WG}$: Enthalpy of the fumes after heat exchange [kcal/Nm$^3$]
$Q_{WG}$: Flow rate of fumes [Nm$^3$/h]

The efficiency of the heat exchanger, or recuperator, can be expressed as:

$$\varepsilon = q / q_{max}$$

i.e. as the ratio between the heat (q) effectively exchanged between the two fluids and the maximum heat ($q_{max}$) theoretically exchangeable between them.

A greater heat exchange efficiency in the recuperator implies lower enthalpy of the combustion fumes after heat exchange ($H_{WG}$) and, therefore, higher efficiency ($\mu$) of the burner.

In other words, the higher the heat exchange efficiency of the recuperator, the higher the preheating of the fluid to be heated (comburent fluid) and the lower the consumptions of fuel, the latter being the main objective of the recovery process.

As indicated in the mentioned table, recovery systems of the centralised type allow high efficiencies and very high preheating temperatures of the fluid to be heated (comburent fluid) to be reached. However, such temperature values lead to system and process difficulties that should not be underestimated. For example, above 550°C, stainless steel and/or insulated pipes and/or pipes internally lined with refractory material must be used. At the same time, the lower the temperature of the fumes (heating fluid) the higher the probability of having to provide for a forced fume evacuation system, as natural draught through a chimney could be insufficient.

Precisely for these reasons, centralised recovery systems are generally sized by limiting the efficiency and limiting the preheating temperature of the air to a maximum of 550°C.

Localised regenerator recovery systems are better, in terms of efficiency, with respect to heat exchanger recovery systems, whether of the centralised or localised type; they, also, do not impose any particular limits on the power of the burners, or better: an increase in the power of the burners - and, therefore, of the flow rates of fluids - does not lead to an excessive reduction in efficiency.

Localised regenerator recovery systems, however, require the installation and management of adjustment systems that penalises them from an economic point of view.

In general, in the event that the individual burners installed have relatively low power levels (<500 kW) there is a widespread use of recovery systems of the localised type with a heat exchanger installed on board each burner which, for this reason, is known as the "self-recuperative" type.

"Self-recuperative" burners are widely used in indirect heating industrial furnaces, i.e. in which radiant tube burners are used.

In fact, in this case, the power of the burners is further limited (<200 kW) and it is, therefore, possible to reach high preheating efficiencies of the comburent fluid with contained dimensions.

Recuperative burners are known from US4877396, DE1551761 and JPS61280309.

However, with particular reference to "self-recuperative" burners the following requirement is perceived:

- to increase the heat exchange efficiency of the recuperator without changing the dimensions thereof (heat exchanger) and, therefore, without changing the dimensions of the "self-recuperative" burner and without changing the power thereof or, in other words,
- to increase the maximum power of the "self-recuperative" burner without changing the dimensions of the recuperator (heat exchanger) and, therefore, without changing the dimensions of the "self-recuperative" burner and without changing the heat exchange efficiency of the recuperator.

Documents WO2017052798A1, US20160131441A1, WO2017008108A1, US20170082371A1, US5725051, US2013264031, US2005217837 and WO2014152239 describe heat exchangers.

The object of the present invention is therefore that of providing a recuperative, i.e. "self-recuperative" industrial burner for industrial furnaces that allows a high heat exchange efficiency and improved performance to be obtained without changing the dimensions with respect to recuperative ("self-recuperative") burners of the known type.

Another object of the present invention is that of providing a recuperative, i.e. "self-recuperative" industrial burner for industrial furnaces that allows the heat transfer coefficient to be maximised without changing the dimensions with respect to recuperative ("self-recuperative") burners of the known type.

The heat transfer coefficient (NTU, Number of Transfer Unit) means the following value:

$$NTU = A * \bar{U} / Cmin$$

Flow heat capacity: C = m * cp
A: heat exchange surface area

$$\bar{U} = \dot{m} * cp / A = \text{Flow heat capacity} / \text{Area} = C/A$$

$$AU = \text{heat resistance}$$

$$\varepsilon = \varepsilon (NTU , Cmin/Cmax)$$

$$\varepsilon = q \ / \ q_{max}$$

$$\dot{m} = \text{mass flow rate}$$

$$c_p = \text{specific heat of the fluid}$$

$$A = \text{Area}$$

Another object of the present invention is that of providing a recuperative, i.e. "self-recuperative" industrial burner for industrial furnaces that allows pressure losses of the recuperator (heat exchanger) that equips it to be minimised with respect to recuperative ("self-recuperative") burners of the known type. Pressure drops are generally indicated by the following formula:

$$f = C1 \ * \ Re^P \ \text{with} \ f = \rho \ T/G^2/2g$$

$$\dot{m} \ * \ \Delta p \ / \ \rho = 1/2g$$

Delta P = C1 * density * (speed)$^2$ / (hydraulic diameter)$^2$

Another purpose of the present invention is that of realising a recuperative ("self-recuperative") industrial burner for industrial furnaces that can be used both with naked flame operation and with radiant tube operation.

Another object of the present invention is that of realising a recuperative ("self-recuperative") industrial burner for industrial furnaces that is particularly simple and functional, with contained costs.

These objects according to the present invention are obtained by realising a recuperative ("self-recuperative") industrial burner for industrial furnaces as recited in claim 1. The two-part form of claim 1 is based on the prior art US 4 877 396 A.

Further characteristics are envisaged in the dependent claims.

The characteristics and advantages of a recuperative industrial burner for industrial furnaces according to the present invention will be more apparent from the following description, which is to be understood as exemplifying and not limiting, with reference to the appended schematic drawings, wherein:

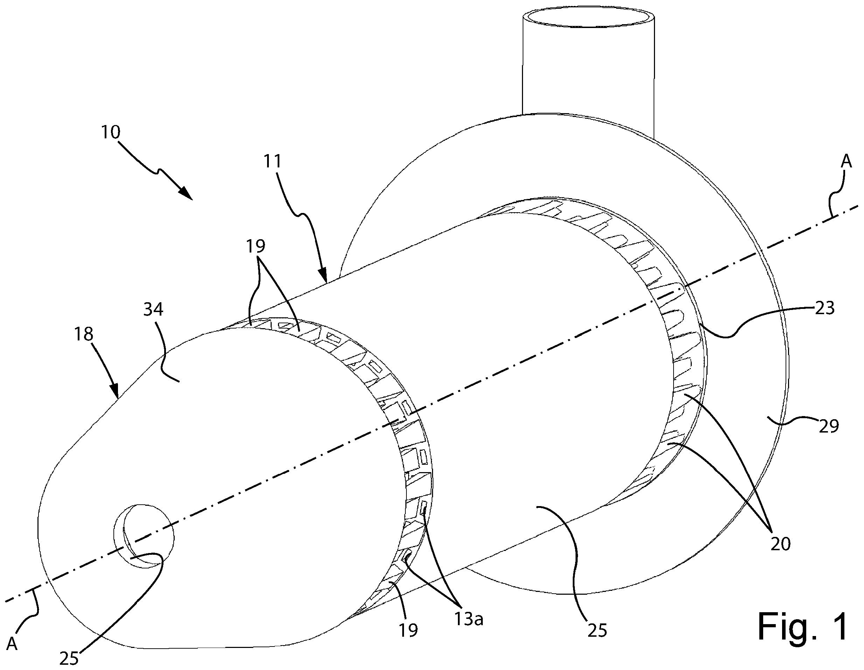

Figure 1 is a schematic axonometric view of a self-recuperative burner according to a possible embodiment of the present invention;

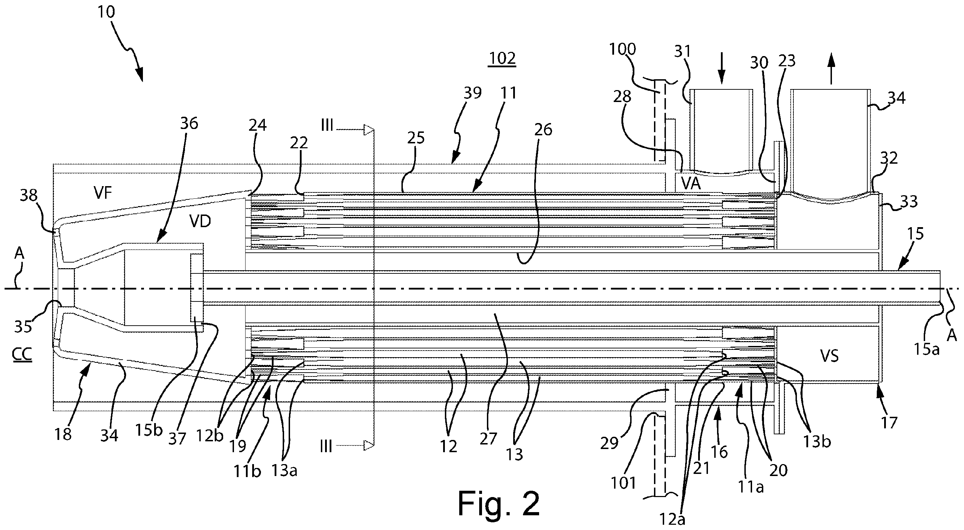

Figure 2 is a schematic longitudinal section view of a self-recuperative burner according to a possible embodiment of the present invention;

Figures 3a and 3b are schematic sections according to the plane III-III of figure 2 of two different possible configurations of the first channels and of the second channels of the recuperator of the burner according to the present invention;

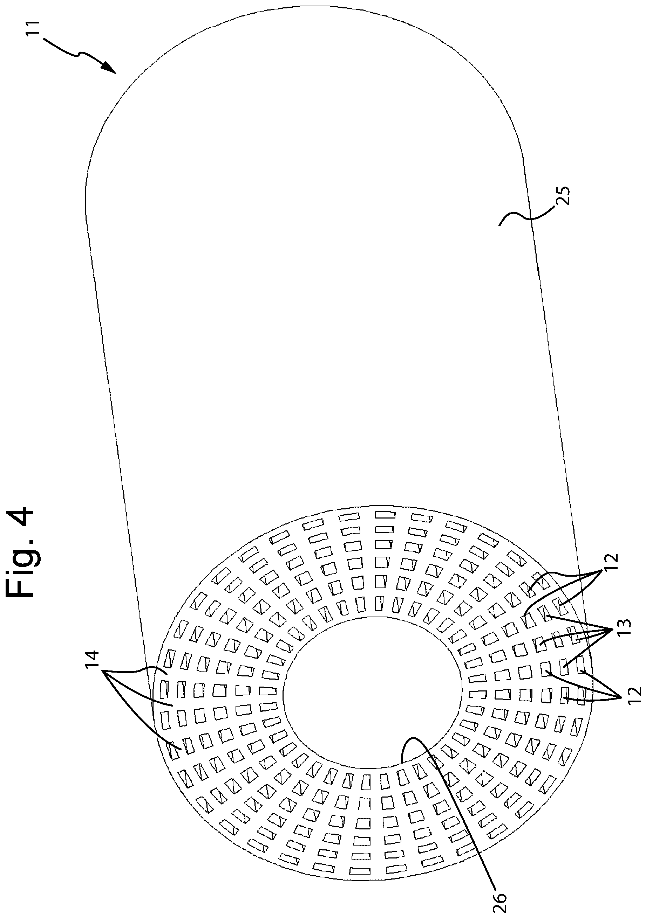

Figure 4 is a schematic axonometric view of a portion of the exchanger-body forming the recuperator of the burner according to the present invention, without the first distribution ducts and the second distribution ducts;

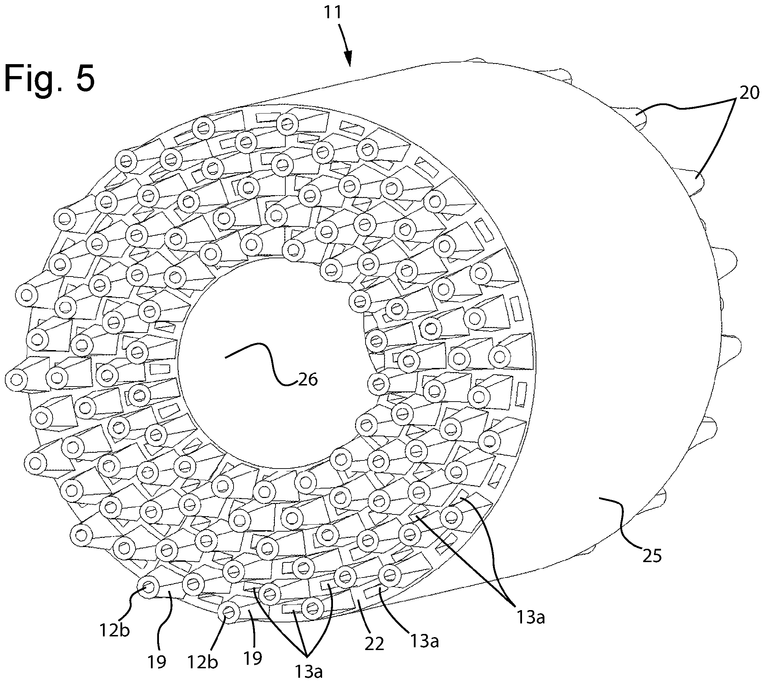

Figure 5 is a schematic axonometric view of the exchanger-body forming the recuperator of the burner according to the present invention, complete with the first distribution ducts and the second distribution ducts;

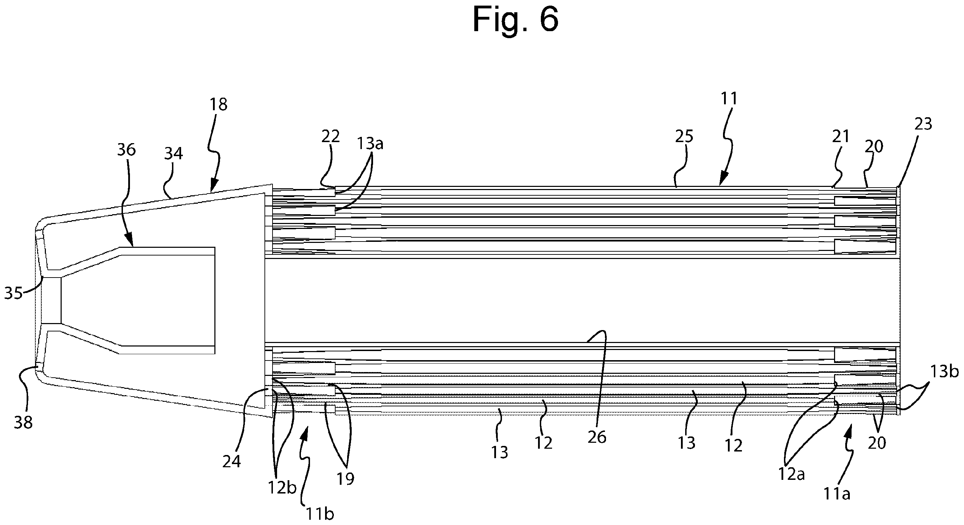

Figure 6 is a schematic longitudinal section of the exchanger-body forming the recuperator of the burner according to the present invention complete with the distribution manifold of the heated fluid and with the flame tube that equip the burner;

Figure 7 is a schematic representation of a possible configuration of the matrix of the first channels and second channels with a square cross section;

Figure 8 shows a table portraying the data comparing burners of the known type with centralised heat recovery or on board burner or with regeneration;

Figure 9 shows schematically and in cross section a portion of a matrix of first channels and second channels alternately with one another along a cylindrical crown.

With reference to the accompanying figures, a recuperative, i.e. self-recuperative, industrial burner is shown, for industrial furnaces, indicated overall with reference number 10.

It is specified that in the present description, adjectives such as "first" and "second" are only used for the purposes of better descriptive clarity and should not be considered in the limiting sense, adjectives such as "front" and "rear" refer to the usual arrangement of the burner 10 in operating conditions, whereas adjectives such as "hot" and "cold" are to be considered in the relative sense.

"Fluid to be heated" or "heated" means the fluid which following heat exchange undergoes an increase in temperature.

Furthermore, corresponding elements are indicated with the same reference number.

The burner 10 is of the so-called recuperative or self-recuperative type, recovering the heat of the combustion fumes for heating (preheating) the comburent fluid and/or the combustible fluid. The combustion fumes are precisely those of the same burner or are comprised of the combustion fumes taken from the combustion chamber in which the burner is installed together with other burners.

Generally, the comburent fluid consists of air and the combustible fluid of gas.

In the following description, reference will be made to the case in which the fluid to be heated or the heated fluid comprises the comburent fluid (i.e. air) and the heating fluid comprises combustion fumes.

However, alternative embodiments of the burner 10 are not excluded, in which the recuperator is used for heating the combustible fluid (gas) or both the comburent fluid and the combustible fluid.

In particular, in the case of fuels with low or average calorific power, such as for blast furnace gases (BFG with calorific power < 900 kcal/Nm$^3$) or steelworks gases (BOF with calorific power <2000 kcal/Nm$^3$), it is possible to use the burner 10 to preheat the fuel, rather than the comburent fluid. In fact, as these are low grade fuels, their flow rates are higher than those of the related fuel, therefore it is more efficient to preheat the fuel rather than the comburent fluid.

The burner 10 may be configured both for naked flame operation and for radiant tube operation.

The burner 10 is configured to be mounted in a wall 100 of an industrial furnace so that it extends at least partially through an opening 101 formed in the wall 100. The wall 100 delimits a chamber 102 of the furnace.

The furnace, in particular, is a steelmaking furnace and may be a furnace for heating or treating material.

The furnace per se is not further described or represented, being of the type known to those skilled in the art.

The burner 10 comprises a recuperator (i.e. a heat recuperator or heat exchanger) configured to heat (i.e. preheat prior to the combustion reaction) at least one fluid selected among the combustible fluid and the comburent fluid by means of the heat of the combustion fumes generated by the combustion of the combustible fluid and the comburent fluid.

The recuperator comprises an exchanger-body 11 for the heat exchange between the fluid to be heated or the heated fluid and the heating fluid, which is constituted by combustion fumes; the exchanger-body 11 extends longitudinally along a longitudinal axis A-A between a first end 11a and a second end 11b, which are axially opposite one another.

With reference to the embodiments shown in the appended figures, the second end 11b of the exchanger-body 11 is turned towards the chamber 102 of the furnace and, advantageously, housed therein; it is, therefore, at the front end of the burner 10. The first end 11a of the exchanger-body 11 instead is turned in the opposite direction with respect to the chamber 102 of the furnace and, advantageously, housed outside it beyond the wall 100; it is therefore defined at the rear end of the burner 10.

The first end 11a of the exchanger-body 11 therefore defines the "cold side" of the recuperator or of the burner 10, while the second end 11b of the exchanger-body 11 defines the "hot side" of the recuperator or of the burner 10.

A matrix is formed in the exchanger-body 11 that consists of a plurality of first channels 12, which are crossed by said fluid to be heated or the heated fluid, and of a plurality of second channels 13, which are crossed by combustion fumes or heating fluid.

The first channels 12 and the second channels 13 extend along the longitudinal extension of the exchanger-body 11 between the first end 11a and the second end 11b thereof.

According to a characteristic of the present invention, the first channels 12 and the second channels 13 are arranged alternately with one another and are separated from one another by separating walls 14.

Each separating wall 14 that separates mutually adjacent first channels 12 and second channels 13 borders, on one side, at least one of the first channels 12 and, on the other side, at least one of the second channels 13. In this way, the heat exchange surface between the fluid to be heated and the combustion fumes is maximised. In fact, the first channels 12, into which the fluid to be heated flows, are always adjacent to the second channels 13, into which the combustion fumes flow and vice versa. The first channels 12 are never directly adjacent to one another; likewise, the second channels 13 are never directly adjacent to one another.

That is, the first channels 12 and the second channels 13 are distributed alternately with one another forming a "chessboard" matrix and are separated by the separating walls 14 only. The first channels 12 and second channels 13 are distributed mutually alternating along a plurality of lines and along a plurality of columns forming said "chessboard" matrix seen in transverse planes to the longitudinal axis A-A. The first channels 12 of each pair of adjacent lines and of each pair of adjacent columns are mutually staggered and interspersed with second channels 13 and vice versa. The separating walls 14 separate the first channels 12 from the adjacent second channels 13 both along the lines and along the columns of the matrix along which they alternate.

The burner 10 further comprises at least one feeding duct 15 for feeding the other fluid selected from the comburent fluid and the combustible fluid, in the embodiments shown the combustible fluid. The feeding duct 15 has an inlet end 15a associable with a source of said other fluid and an outlet end 15b that finishes in a combustion head, which is in fluid communication with a combustion chamber CC.

In the case in which the burner 10 is of the naked flame type, the combustion chamber CC is comprised of the same chamber 102 as the furnace.

In the case in which the burner 10 is of the radiant tube type, the combustion chamber CC is comprised of the volume contained by the radiant tube that equips the burner 10 and that is not shown being of the type known to those skilled in the art.

The burner 10 further comprises devices for lighting or triggering combustion and devices for detecting the flame, which are also not depicted or described in detail, being of the type known to those skilled in the art.

In more detail, each of the first channels 12 has:

- an inlet end 12a for the inlet of the fluid to be heated and that is in fluid communication with a feeding manifold 16 of the fluid to be heated and
- an outlet end 12b for the outlet therefrom of the heated fluid and that is, directly or indirectly, in fluid communication with the combustion chamber CC.

Each of the second channels 13 has:

- an inlet end 13a for the inlet therein of combustion fumes and that is, directly or indirectly, in fluid communication with the combustion chamber CC and
- an outlet end 13b for the outlet therefrom of the combustion fumes and that is in fluid communication with an exhaust manifold 17 of the combustion fumes.

In the embodiment represented in the appended figures, the burner 10 also comprises a distribution manifold 18 of the heated fluid that is in fluid communication with the outlet ends 12b of the first channels 12 and, directly or indirectly, with the combustion chamber CC.

It is clear that the combustion fumes exiting from the outlet end 13b of the second channels 13 have a lower temperature than the temperature that they have at the inlet to the second channels 13; the combustion fumes exiting from the outlet end 13b of the second channels 13 are therefore known as "cold combustion fumes" and those that enter into the second channels 13 through the respective inlet ends 13a are known as "hot combustion fumes".

Likewise, the fluid to be heated that enters into the first channels 12 through the respective inlet ends 12a has a lower temperature than the temperature that it has at the outlet from the outlet end 12b of the first channels 12; the fluid to be heated that enters into the first channels 12 is therefore known as "fluid to be heated" or "cold fluid" (specifically comburent fluid or cold air) and that which exits from the first channels 12 is therefore known as "heated fluid" or "hot fluid" (specifically comburent fluid or hot air).

Therefore, the first end 11a of the exchanger-body is arranged at the "cold side" of the burner 10, while the second end 11b thereof is arranged at the "hot side" of the burner 10.

To allow the division of the two heat exchange fluids (i.e. the fluid to be heated and the combustion fumes) between the first channels 12 and the second channels 13 at the inlet and/or outlet therefrom so that such two fluids are not mixed together, it is provided that:

- the first channels 12 extend beyond the inlet end 13a and/or the outlet end 13b of the second channels 13 in respective first distribution ducts 19 that end in the inlet end 12a or in the outlet end 12b of the first channels 12, and/or that
- the second channels 13 extend beyond the inlet end 12a and/or the outlet end 12b of the first channels 12 in respective second distribution ducts 20 that end in the inlet end 13a or in the outlet end 13b of the second channels 13.

The different configuration of the first channels 12, with any respective first distribution ducts 19, and second channels 13, with any second distribution ducts 20, depends on the configuration of the burner 10 (e.g. on the configuration and on the relative arrangement of the feeding manifold 16, of the exhaust manifold 17 and of any distribution manifold 18) and of the recuperator that equips it (which for example could be of the type operating in co-current or counter-current).

In greater detail, the exchanger-body 11 has:

- at the first end 11a thereof, a first base 21 that is substantially transversal to the longitudinal axis A-A and at which the inlet ends 12a or the outlet ends 12b of the first channels 12 open and beyond which the second channels 13 extend, which extend beyond it in respective second distribution ducts 20, which end in the inlet end 13a or in the outlet end 13b of the second channels 13 themselves, or vice-versa (i.e. the inlet end 13a or the outlet end 13b of the second channels 13 open at the first base 21 and the first channels 12 that extend beyond it end beyond the first base 21 itself in respective first distribution ducts 19, which end in the inlet end 12a or in the outlet end 13b of the first channels 12 themselves), and

- at the second end 11b thereof, a second base 22 that is substantially transversal to the longitudinal axis A-A and at which the inlet ends 13a or the outlet ends 13b of the second channels 13 open and beyond which the first channels 12 extend, which extend beyond it in respective first distribution ducts 19, ending in the inlet end 12a or in the outlet end 12b of the first channels 12 themselves, or vice-versa (i.e. the inlet end 12a or the outlet ends 12b of the first channels 12 open at the second base 22 and the second channels 13 that extend beyond it open beyond the second base 22 itself in respective second distribution ducts 20, which end in the inlet end 13a or in the outlet end 13b of the second channels 13 themselves).

With reference to the embodiment shown in the appended figures, the recuperator is of the type operating in counter-current; the flow of the fluid to be heated that crosses the first channels 12 and the flow of the combustion fumes that crosses the second channels 13 thus have the same direction, but opposite orientations. Such use configuration (counter-current) is advantageous in terms of heat exchange efficiency.

In that case, the inlet end 12a of the first channels 12 and the outlet end 13b of the second channels 13 are formed at the first end 11a of the exchanger-body 11, while the inlet end 13a of the second channels 13 and the outlet end 12b of the first channels 12 are formed at the second end 11b of the exchanger-body 11.

On the "cold side" or rear of the burner 10, the feeding manifold 16 of the fluid to be heated is arranged upstream (in the orientation of the flow of the combustion fumes) of the exhaust manifold 17 of the cold combustion fumes. In order to keep separate the flow of fluid to be heated at the inlet to the first channels 12 from the flow of the cold combustion fumes at the outlet from the second channels 13, the second channels 13 extend for at least one segment of their length in respective second distribution ducts 20 that extend beyond the inlet end 12a of the first channels 12 and that end in the outlet end 13b of the second channels 13.

The inlet ends 12a of the first channels 12 are housed in the volume internal to the feeding manifold 16; the second distribution ducts 20 extend through the feeding manifold 16 and open with the respective outlet ends 13b of the second channels 13 in the exhaust manifold 17.

Advantageously, the second distribution ducts 20 open with the respective outlet ends 13b of the second channels 13 at a first baffle 23 that separates the feeding manifold 16 from the exhaust manifold 17.

On the "hot side" or front of the burner 10, the distribution manifold 18 of the heated fluid is arranged downstream (in the orientation of the flow of the heated fluid) of the inlet ends 13a of the second ducts 13. In order to keep separate the flow of heated fluid at the outlet of the first channels 12 from the flow of the hot combustion fumes at the inlet to the second channels 13, the first channels 12 extend for at least one segment of their length in respective first distribution ducts 19 that extend beyond the inlet end 13a of the second channels 13 and that end in the outlet end 12b of the first channels 12. The inlet ends 13a of the second channels 13 are housed in a feeding volume VF of the hot combustion fumes which is comprised of the same combustion chamber CC or is however in fluid communication therewith.

The first distribution ducts 19 extend through the feeding volume VF and open with the respective outlet ends 12b of the second channels 12 in the volume internal to the distribution manifold 18.

Advantageously, the first distribution ducts 12 open with the respective outlet ends 12b of the first channels 12 at a second baffle 24 that separates the distribution manifold 18 from the feeding volume VF. As will appear more clearly below, such second baffle 24 constitutes a base wall of the tubular body that forms the distribution manifold 18.

However, alternative embodiments are not excluded in which, for example, as a function of co-current or counter-current operation of the recuperator and/or of the different arrangement of the feeding manifold 16, of the exhaust manifold 17 and of the distribution manifold 18, only the first channels 12 extend at one or both opposite ends in respective first distribution ducts 19 or only the second channels 13 extend at one or both the opposite ends in respective second distribution ducts 20.

The exchanger-body 11 then comprises an outer side wall 25, that delimits it laterally and externally, and a central tubular cavity, which is coaxial to the longitudinal axis A-A and which defines an inner side wall 26 of the exchanger-body 11.

The matrix formed by the first channels 12 and by the second channels 13 is formed between the outer side wall 25 and the inner side wall 26 of the exchanger-body 11.

In the embodiment shown in the appended figures, the outer side wall 25 and the inner side wall 26 are coaxial to one another and cylindrical; the matrix is therefore formed in the cylindrical crown delimited by them.

In that case, as appears clear from the appended figures, considering cross sections of the exchanger-body 11 comprised between the first base 21 and the second base 22 thereof, that is intermediate to the first and second ends thereof, the first channels 12 and the second channels 13 are distributed, alternately, along a plurality of circular crowns concentric to the longitudinal axis A-A. Along each of such circular crowns the first channels 12 alternate with the second channels 13. The first channels 12 of a circular crown are instead staggered with respect to the first channels 12 of the adjacent circular crowns and are aligned with the second channels 13 thereof; therefore along radial directions there are rows of first channels 12 and second channels 13 alternately with one another. In this way, each first channel 12 is only surrounded by and bordering second channels 13 and vice versa. In this case the first channels 12 and the second channels 13 are distributed mutually alternating along a plurality of circumferential lines and a long a plurality of radial columns forming the "chessboard" matrix.

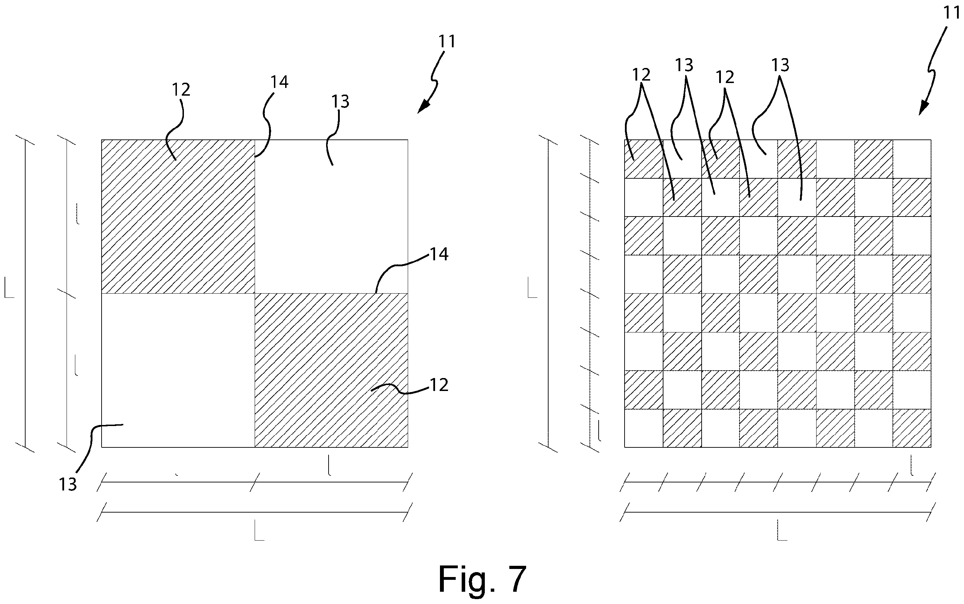

However, alternative embodiments are not excluded in which, for example, the shape of the outer side wall 25 and of the inner side wall 26 of the exchanger-body 11 are different from the one represented. They could, for example, be cylindrical with an elliptical section or prismatic with a square or triangular section; they could also have a different shape from one another. The chosen configuration depends, for example, on the available space for the installation of the burner 10. In a possible alternative embodiment shown in figure 7 the first channels 12 and the second channels 13 are distributed mutually alternating along a plurality of straight lines (i.e. rows) mutually parallel and along a plurality of columns mutually parallel and orthogonal to the rows, forming the "chessboard" matrix.

Furthermore, in the embodiment shown in the appended figures, the first channels 12 and the second channels 13 are rectilinear and parallel to the longitudinal axis A-A.

However, alternative embodiments are not excluded in which the first channels 12 and the second channels 13, although being able to extend parallel to one another, have a non-rectilinear development, for example curved or spiral shaped.

In any case, the first channels 12 and the second channels 13 are distributed alternately with one another in a matrix, so that first channels 12 are only surrounded by and border with second channels 13 and vice versa. The heat exchange between the fluid to be heated that flows into the first channels 12 and the combustion fumes that flow into the second channels 13 takes place by convection and conduction: the combustion fumes that cross the second channels 13 transfer heat by convection to the side of the separating walls 14 directly bordering them, the separating walls 14 are heated by conduction and, at the side of them that borders the first channels 12, transfer heat by convection to the fluid to be heated that crosses the first channels 12 themselves.

Furthermore, in the embodiment shown in the appended figures, the first channels 12 and the second channels 13 have a substantially constant cross section along the whole length extension thereof except along the respective first distribution ducts 19 and second distribution ducts 20. However, alternative embodiments are not excluded in which the first channels 12 and/or the second channels 13 may have a cross section that varies, in shape and/or size, along the longitudinal extension thereof as a function, for example, of the different volumes occupied by the fluid to be heated and/or by the combustion fumes as their temperature varies.

As can be immediately understood by a person skilled in the art, the length extension of the first channels 12 and of the second channels 13 is sized as a function of the heat exchange efficiency to be obtained, the pressure losses of the two fluids that cross them and the available space for the installation of the burner 10. In general terms, the longer the first channels 12 and the second channels 13, the greater the exchange surface area between the fluids flowing therein and the greater the efficiency of the heat exchange between them, however, as the length of the first channels 12 and of the second channels 13 increases, the pressure losses of the fluids crossing them also increase. The choice of the length of the first channels 12 and of the second channels 13 is, therefore, influenced by the different parameters as a function of the result to be obtained.

The shape and size of the cross sections of the first channels 12 and of the second channels 13, as well as the respective separating walls 14, can furthermore be determined as a function of the optimisation of the heat exchange between the fluid to be heated and the combustion fumes. In particular, the shape of the cross sections of the first channels 12 and of the second channels 13 is such as to maximise the passage section of the fluids crossing them and to reduce to a minimum the thickness of the separating walls 14. The thickness of the separating walls 14 is particularly important in the transitory operating steps of the burner 10, during which the thermal inertia of the separating walls 14 must be advantageously minimal. Such transitory steps usually occur when the burner 10 is controlled with the on/off function and the two fluids (the fluid to be heated and the combustion fumes) flow respectively into the first channels 12 and into the second channels 13 of the exchanger-body 11 simultaneously and intermittently.

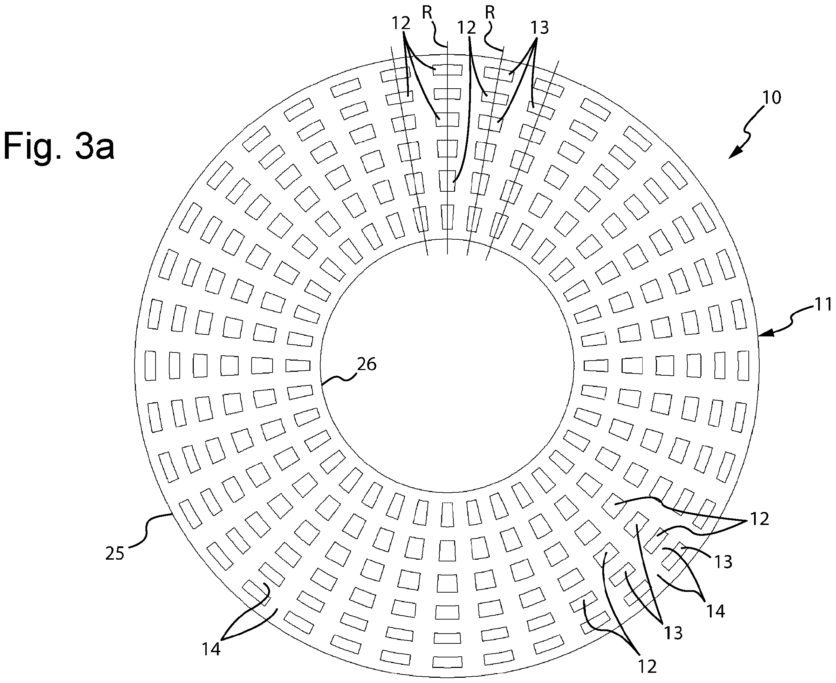

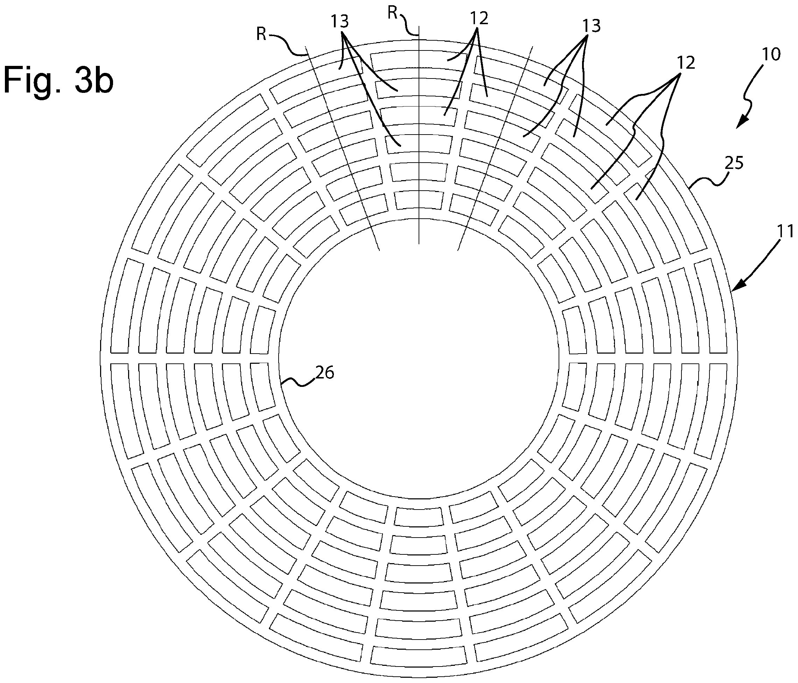

With reference to figures 3a and 3b the following is observed.

As is known, the formula for calculating the convective heat transfer coefficient (coefficient is proportional to the Nusselt number) is as follows:

$$h \ \alpha \ Nu \ = \ C2 \ * \ Re^n \ * \ Pr^m$$

Where:

*h: convective heat transfer coefficient [W/m2K]*
*Nu: Nusselt number*
*C2: "empirical" constant*
*Re: Reynolds number (= V\*Dh/v)*
*Pr: Prandtl number*
*V: Average fluid speed [m/s]*
*Dh: hydraulic diameter (= 4 \* Area / perimeter)*
*v: kinematic viscosity*

from which it can be deduced that to obtain an equal heat transfer coefficient between the different channels, although with a different section, the same Reynolds number is needed. To do this, considering that the viscosity and the Prandtl number only depend on the fluid, the geometry of the first channels 12 and of the second channels 13 must be modified, and therefore the hydraulic diameter Dh, and the fluid flow speed in the first channels 12 and in the second channels 13 appropriately.

Considering figure 3a it is possible, by way of example, to identify therein the matrix comprising the first channels 12 and the second channels 13 alternated with one another. In this configuration, the first channels 12 and the second channels 13 are sized so that their cross sections all have the same area long the whole matrix. It follows that, if the pressure losses within each first channel 12 and each second channel 13 are equal, within them there will not only be the same Reynolds number, but also the same flow speed of the respective fluid and the same hydraulic diameter.

Such configuration is optimal, but limiting in terms of thickness of the separating walls 14.

In the configuration shown in Figure 3b, the first channels 12 and the second channels 13 are configured so that their cross sections are not constant along the whole matrix. In this way, it is possible to minimise the thickness of the separating walls 14 that separate the first channels 12 from the second channels 13 with a consequent reduction of the thermal inertia for heating the separating walls 14 themselves and, at the same time, a reduction in the longitudinal heat conduction of the outer 25 and inner 26 side walls of the exchanger-body 11.

In this case, if the division of the flow between the first channels 12 and the second channels 13 were not optimised, a different Reynolds number would be obtained between the different first channels 12 and the second channels 13 with consequent non-uniformity of the heat transfer coefficient h.

To overcome this drawback it is possible to conform and size the first distribution ducts 19 and the second distribution ducts 20 appropriately so as to introduce a control of the concentrated losses that are generated by them.

The shape and outer dimensions of the first distribution ducts 19 and of the second distribution ducts 20 are important for the distribution of the fluid that hits them externally. The shape and outer dimensions of the first distribution ducts 19 are important for the distribution of the combustion fumes that hit them externally before entering into the second channels 13, the shape and outer dimensions of the second distribution ducts 20 are important for the distribution of the fluid to be heated (air) that hits them externally before entering into the first channels 12.

The shape and inner dimensions of the first distribution ducts 19 and of the second distribution ducts 20 are important for the distribution of the fluid that crosses them internally. The shape and inner dimensions of the first distribution ducts 19 are important for the distribution of the heated fluid that exits from the first channels 12, the shape and inner dimensions of the second distribution ducts 20 are important for the distribution of the cold combustion fumes that exit from the second channels 13.

Considering the embodiment shown in the appended figures, in which the matrix of the first channels 12 and of the second channels 13 extends into the cylindrical crown delimited by the outer side wall 25 and by the inner side wall 26 with a "chessboard" configuration as described above, the first distribution ducts 19 and the second distribution ducts 20 are configured and sized externally so that the pressure losses of the respective fluid that hits them externally (i.e. the hot combustion fumes and the cold fluid to be heated, respectively) are calculated so as to optimise the division of their flow at the inlet to the second channels 13 and into the first channels 12, respectively, which alternate along the rows that extend along the radial directions R. Such sizing also considers the distributed pressure losses that are generated along the first channels 12 and the second channels 13.

Still with reference to the matrix of first channels 12 and second channels 13 as described above and as represented in the appended figures, the first channels 12 and the second channels 13 that alternate along the circular crowns with the larger diameter (more external) facilitate the passage of the fluid that crosses them rather than the first channels 12 and the second channels 13 that alternate along the circular crowns with the smaller diameter (more internal). The first channels 12 and the second channels 13 that alternate along circular crowns with the smaller diameter are thus penalised by larger pressure losses that the respective fluid undergoes when crossing the free spaces between the second distribution ducts 20 and the first distribution ducts 19, respectively, before reaching them.

For this reason, in order to optimise the heat exchange between the two fluids, it is necessary to introduce expedients and/or devices through which desired pressure losses are generated, calculated in order to uniform the flow rates of the two fluids along the respective first channels 12 and second channels 13 of the whole matrix. Such expedients and/or devices may consist of a desired configuration and/or a desired outer sizing of the first distribution ducts 19 and of the second distribution ducts 20 which hinder and obstruct, in particular in the radial direction, the passage through them of the hot combustion fumes at the inlet to the second channels 13 and of the cold fluid to be heated at the inlet to the first channels 12, respectively.

Likewise, the conformation and sizing of the inner cross section of the first distribution ducts 19 and of the second distribution ducts 20 are described so that the pressure losses generated within them compensate, if necessary, for the pressure losses induced by the sizing described so far.

Substantially, the shape and inner and outer dimensions of the first distribution ducts 19 and of the second distribution ducts 20 are determined as a function of the distribution, in terms of flow, of the two fluids (fluid to be heated and combustion fumes) along the first channels 12 and the second channels 13, respectively.

A possible method is now illustrated for the sizing of the first channels 12 and of the second channels 13 in order to equalise heat flows $q_i$ through the separating walls 14 of the first channels 12 and the second channels 13 at a cross section of the respective matrix. Obviously, different cross sections, i.e. taken at a different height along the longitudinal axis A, will have different heat flows, as the temperature difference between the combustion fumes and the fluid to be heated is different.

The equalisation of the heat flows between the first channels 12 and the second channels 13 at each cross section of the matrix allows good heat exchange efficiency to be obtained, preventing so-called "passive heat flows" being generated between the first channels 12 and second channels 13, ensuring that most of the heat energy of the combustion fumes is transferred to the fluid to be heated. If, on the contrary, the heat flows between the first channels 12 and the second channels 13 were non-uniform, with first channels 12 and second channels 13 that exchange more heat with respect to others, the temperature difference between the combustion fumes and the fluid to be heated would be non-uniform. Such temperature non-uniformity would lead to a loss of efficiency of the exchanger, in particular in the areas where the temperature difference between the two fluids is greater.

By maximising the heat exchange area, a high efficiency exchanger section is therefore obtained.

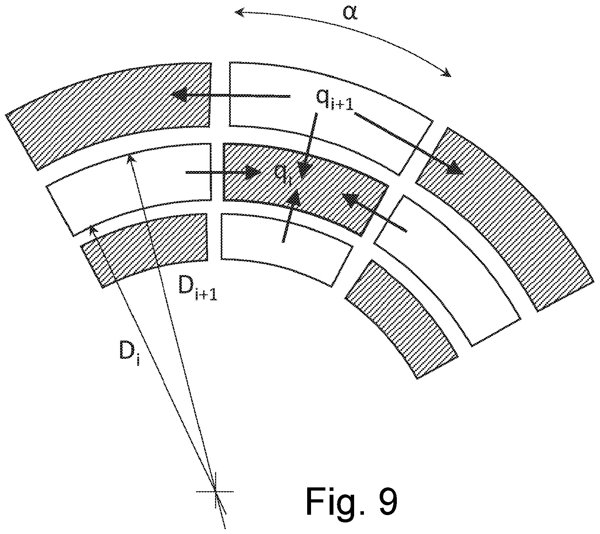

For simplicity purposes, reference will be made below to a matrix in which the first channels 12 and the second channels 13 are distributed alternately with one another in a cylindrical crown of which Figure 9 shows a partial cross section.

It is assumed that the separating walls between the various channels have a negligible thickness as will appear more clearly below, assumed to be equal to zero.

It is noted that the first channels 12 and the second channels 13 have a conformation and distribution like the one described above with reference to Figure 3a or Figure 3b.

Along each radial direction R the first channels 12 and the second channels 13 are aligned alternately with one another within the circular crown (in section) delimited internally by the circumference of the smaller diameter equal to the inner diameter of the exchanger (inner side wall 26), and externally by the circumference of the larger diameter equal to the outer diameter of the exchanger (outer side wall 25). Still with reference to a cross section of the exchanger-body 11, the first channels 12 and the second channels 13 that alternate along a same radial direction R are laterally delimited (i.e. along the radial sides thereof) by respective straight lines that delimit a circular sector whose angle at the centre is indicated as $\alpha$, where $\alpha$ is equal to $2\pi/N$, N being an even number.

For simplicity purposes the first channels 12 and the second channels 13 will be indicated as "channels" of the matrix indexed with the indices $ij$, where i varies from 1 to M ($i$=1...M), M being the number of channels that alternate along each radial direction R of the matrix, and j varies from 1 to N ($j$=1...N), N being the number of channels that alternate along each circular crown of the matrix. The ij-th channel is therefore delimited in the radial direction by the diameters $D_i$ and $D_{i+1}$, where i varies from 1 to M and where $D_1$ is the smallest diameter of the exchanger (known value) and $D_{M+1}$ is the largest diameter equal to the outer diameter of the exchanger (known value).

Likewise, the separating walls 14 will be indicated as "walls".

A portion of the matrix is further considered that parallel to the longitudinal axis A has a length LA, i.e. a trunk of the heat exchanger of length LA is considered.

The fundamental formulae for the sizing method considering the heat transfer coefficient $\boldsymbol{h_{ij}}$ through the wall of the ij-th channel

$$h_{ij} = \frac{q_{ij}}{A_{ij}\, \Delta T_{h,c}} \qquad\qquad (\ 1\ )$$

Where:

$q_{ij}$ is the total heat flow through the walls of the ij-th channel, expressed for example in [W],

$A_{ij}$ is the effective exchange area of the wall considered (surface lapped by the fluid that exchanges heat) and $\Delta T_{h,c} = T_h - T_c$ represents the temperature difference relative to the combustion fumes at temperature $T_h$ and to the fluid to be heated to temperature $T_c$ separated by the wall considered.

The link between the heat transfer coefficient $h_{ij}$ and the geometric and fluid-dynamic parameters of the heat exchanger can be expressed through functional relationships such as:

$$h_{ij} \sim Nu_{ij} = C \, Re_{ij}^{\,n} \, Pr_{ij}^{\,m} \qquad ( \ 2 \ )$$

Where:

C, $n$ and m represent different regression constants of the empirical data in the form expressed by the relationship (2),

$Re_{ij} = \dfrac{u_{ij} \, D_{c,ij}}{\mu}$ is the Reynolds number for the wall of the ij-th channel, obtained from the average speed $u_{ij}$ of the fluid in the ij-th channel,

$D_{c,ij} \sim \sqrt{A_{t,ij}}$ is the average characteristic diameter of the ij-th channel, which is connected to the cross sectional area (passage section) of free flow $A_{t,ij}$,

$\mu$ indicates the dynamic viscosity of the fluid itself,

$Pr_{ij}$ is the average Prandtl number, a function of the sole thermophysical properties of the fluid.

By introducing the mass flow rate $\dot{m}_{ij}$ for the ij-th channel with the respective wall, the average speed of the fluid can also be expressed as

$$u_{ij} = \frac{\dot{m}_{ij}}{\rho \, A_{t,ij}}$$

Another fundamental relationship is the one that expresses the pressure drops within the ij-th channel, which assumes the form

$$\Delta p_{ij} = Kij \, \frac{u_{ij}^{\,2}}{2 \, \rho} \qquad ( \ 3 \ )$$

where $\mathbf{K_{ij}}$ (pressure loss coefficient of the ij-th channel) still represents an empirical constant, resulting solely from the geometric parameters of the channel and not from the thermophysical properties of the fluid itself.

Different sizing methods can be followed, according to the design parameters of interest.

Reference is made below by way of example to a matrix whose channels are distributed in a cylindrical crown that in the cross section is shown as represented schematically and partially in the appended Figure 9, the sizing process can however be extended to different distributions of channels.

The sizing process considers as input data:

- the size of the angle $\alpha$ of the channels as shown in Figure 9,
- the total flow rate of the combustion fumes (hot fluid) $\dot{m}_h$,
- the total flow rate of the fluid to be heated (cold fluid), i.e. air, $\dot{m}_c$ and
- the inlet temperatures of the combustion fumes and of the fluid to be heated (air),
- the available pressure jumps for the combustion fumes and the fluid to be heated (air) respectively $\Delta\mathbf{p_h}$ and $\Delta\mathbf{p_c}$.

The sizing method generates as output data the diameters $D_i$ of the separating walls of the various channels. Considering the geometric shape of the channels shown in Figure 9, the formulae for calculating the heat exchange area and the cross sectional area (passage section) for the ij-th channel are respectively

$$A_{ij} = LA\left(\frac{\alpha}{2}(D_{i+1} + D_i) + (D_{i+1} - D_i)\right) \qquad (4)$$

$$A_{t,ij} = \frac{\alpha}{8}(D_{i+1}^2 - D_i^2) \qquad (5)$$

where the thicknesses of the walls are ignored for simplicity purposes and $A_{ij}$ and $A_{t,ij}$ depend solely on the inner diameter $D_i$ and the outer diameter $D_{i+1}$ of the circular crown along which the ij-th channel is located. In order to maximise the heat exchange efficiency two different sizing methods can be adopted.

According to a first sizing method, it is assumed that there is no interest in regulating pressure losses localised at the inlet and/or outlet from the channel through appropriate constrictions from the calibrated diameter. This configuration is the simplest one possible, where the pressure losses are equal in all the channels.

According to a second method, thanks to the introduction of calibrated narrowings of the passage section of each channel, it is possible to differentiate the pressure losses between them. By adding this further design parameter, it is in fact possible to realise channels with the same heat flow and differentiated flow rates that do not directly follow the ratio of the passage areas.

The first sizing method is now illustrated (with uniform pressure losses) with particular reference to the geometry of the type illustrated in Figure 9, the method being easily adaptable to cases with different channel geometries. $D_i$ being the unknown to be determined, considering in particular the channels $ij$ and $i+1,j'$ placed on two adjacent dimensions $D_i < D_{i+1}$ crossed by the same fluid (combustion fumes or fluid to be heated) and, therefore, arranged in different circular sectors and adjacent to one another, in this type of sizing it is imposed that

$$\Delta p_{ij} = \Delta p_{i+1,j'}, \qquad (6)$$

from which, as $\rho_{ij} = \rho_j + 1,_{j'}$, and also from $K_{ij} = K_{i+1,j'}$ due to the fact that the channels have similar shapes, it follows that

$$\frac{\dot{m}_{ij}}{A_{t,ij}} = \frac{\dot{m}_{i+1,j'}}{A_{t,i+1,j'}} \qquad (7)$$

Formula (7) expresses the fact that, having established the same pressure loss on the various channels, the flow rate is divided in proportion to the ratio of the free flow areas.

The second relationship that is imposed is the so-called "good design" one as expressed above (i.e. that the net heat flow is equal for all the channels), so that the heat flows of adjacent channels, i.e. on adjacent circular crowns, are equal, i.e. that the section of the exchanger is used at its maximum efficiency. Such design relationship is therefore expressed as

$$q_{ij} = q_{i+1,j'} \qquad (8)$$

which, after substituting (1) and (2), considering the equality of the Prandtl numbers and the thermophysical properties, implies that:

$$Re_{ij}^n A_{ij} = Re_{i+1,j'}^n A_{i+1,j'}$$

From the definition of Reynolds number and remembering that $D_{c,ij} \sim \sqrt{A_{t,ij}}$ , it can be deduced that:

$$u_{ij}{}^n A_{t,ij}{}^{n/2} A_{ij} = u_{i+1,j'}{}^n A_{t,i+1,j'}{}^{n/2} A_{i+1,j'}$$

which, for the definition of average fluid speed, implies that

$$\dot{m}_{\mathrm{ij}}{}^{n}\, A_{t,\mathrm{ij}}{}^{-n/2}\, A_{\mathrm{ij}} = \dot{m}_{\mathrm{i+1,j'}}{}^{n}\, A_{t,\mathrm{i+1,j'}}{}^{-n/2}\, A_{\mathrm{i+1,j'}} \qquad\qquad (\,9\,)$$

hence, using formula (7) the geometric relationship is reached which connects the passage and heat exchange sections

$$A_{t,\mathrm{ij}}{}^{n/2}\, A_{\mathrm{ij}} = A_{t,\mathrm{i+1,j'}}{}^{n/2}\, A_{\mathrm{i+1,j'}} \ .$$

In the case of the geometry in Figure 9, the substitution of relationships (4) and (5) allows the following design relationship to be reached:

$$\left(\frac{\alpha}{2}(D_{i+1}+D_i)+(D_{i+1}-D_i)\right)\left(D_{i+1}^2-D_i^2\right)^{\frac{n}{2}} = \left(\frac{\alpha}{2}(D_{i+2}+D_{i+1})+(D_{i+2}-D_{i+1})\right)\left(D_{i+2}^2-D_{i+1}^2\right)^{n/2} \qquad (\,10\,)$$

Where $D_i$ does not vary as the index j of the ij-th channels vary.

**M** being the number of channels that follow one another along each radial direction R of the matrix forming the heat exchanger, it is possible to write such equation for every integer of i comprised between 1 and M-1 (i= 1 ... M-1), thus obtaining a system of M-1 equations in M-1 unknowns (considering that $D_1$ corresponds to the inner diameter of the exchanger, coinciding with the diameter of the inner side wall 26, and that **$D_{M+1}$** corresponds to the outer diameter of the exchanger coinciding with the diameter of the outer side wall 25, therefore **$D_1$** and **$D_{M+1}$** being input parameters of the calculation).

The second sizing method is now described (i.e. with differentiated pressure losses). The pressure losses may be differentiated for example by introducing constrictions at the inlet and/or outlet of each duct, constrictions that may also be differentiated for each duct as a function of its position with respect to the corresponding feeding or collection manifold. Additionally or alternatively, the pressure losses may be differentiated by modifying the surface finish of the individual ducts.

The case with calibrated pressure losses at the inlet and/or outlet to the individual channels is analysed in a similar way to the case with uniform pressure losses (i.e. the first method described above). The only variation to consider is that the formula (6) in this case becomes

$$\Delta p_{\mathrm{ij}} + \Delta p_{in,\mathrm{ij}} + \Delta p_{out,\mathrm{ij}} = \Delta p_{\mathrm{i'j'}} + \Delta p_{in,\mathrm{i'j'}} + \Delta p_{out,\mathrm{i'j'}} \qquad\qquad (\,11\,)$$

Considering pairs of ij-th and i'j'-th channels, where $\Delta \boldsymbol{p_{in,ij}}$, $\Delta \boldsymbol{p_{out,ij}}$ are design parameters, which can be calibrated so as to obtain a desired subdivision of the flow rates. Such design parameters introduce a further degree of freedom, which alongside the "good design" relationship expressed by formula (8), allows further freedom to be obtained on the definition of the geometric shape of the sections of the channels. The relationship provided by formula (11) assumes a similar shape to that of formula (7) which is in fact

$$\Delta p_{in,\mathrm{ij}} + \frac{K_{\mathrm{ij}}}{2\,\rho_{\mathrm{ij}}^{3}}\left(\frac{\dot{m}_{\mathrm{ij}}}{A_{t,\mathrm{ij}}}\right)^{2} + \Delta p_{out,\mathrm{ij}} = \Delta p_{in,\mathrm{i'j'}} + \frac{K_{\mathrm{i'j'}}}{2\,\rho_{\mathrm{i'j'}}^{3}}\left(\frac{\dot{m}_{\mathrm{i'j'}}}{A_{t,\mathrm{i'j'}}}\right)^{2} + \Delta p_{out,\mathrm{i'j'}} \qquad (\,12\,)$$

where $K_{ij}$ and $K_{\mathrm{i'j'}}$ are pressure loss coefficients for the ij-th and i'j'-th channels, which in that case assume different values, the ij-th and the i'j'-th channels being able to have a different conformation.

Formula (12), just like formula (7), expresses again the link between the flow rates in the two channels, where in that case the calibrated pressure losses at the inlet and/or outlet from the individual channel also have an effect. By combining formula (12) and formula (9) it is possible to reach a system of equations where further design parameters are also represented by the calibrated pressure losses. Such calibrated pressure losses may be selected so as to guarantee the "good design" condition (i.e. uniformity of the heat flows between the channels of the same section) also for geometric cases in which the passage sections of the channels would induce an insufficient division of flows between the various channels to guarantee the desired design condition.

Such system of equations is:

$$\begin{cases} \Delta p_{in,ij} + \dfrac{K_{ij}}{2\,\rho_{ij}^3}\left(\dfrac{\dot{m}_{ij}}{A_{t,ij}}\right)^2 + \Delta p_{out,i} = H \\[4mm] \dot{m}_{ij}^{\,n}\, A_{t,ij}^{\,-n/2}\, A_{ij} = Z \end{cases}$$

Where

- $\Delta p_{in,ij}$, $\Delta p_{out,ij}$ are the pressure losses concentrated at the inlet and at the outlet of the ij-th channel;
- $K_{ij}$ is the coefficient of pressure loss distributed along the ij-th channel;
- $\dot{m}_{ij}$ the mass flow rate of fluid that flows through the ij-th channel;
- $\rho_{ij}$ the density of the fluid that flows through the ij-th channel;
- $A_{t,ij}$ the transversal free section of passage of the fluid of the ij-th channel;
- $A_{ij}$ the total convective heat exchange surface of the ij-th channel;
- H and Z constant values and equal for all of the channels of the exchanger-body 11.

With reference to the appended figures, the first distribution ducts 19 and the second distribution ducts 20 have truncated pyramid shapes with a straight base or truncated cone shapes whose largest base is defined at the second base 22 and at the first base 21 of the exchanger-body 11, respectively.

Advantageously, with reference to the embodiment shown in the appended figures, each first channel 12 extends into a respective first distribution duct 19 which defines the respective outlet end 12b thereof and each second channel 13 extends in a respective second distribution duct 20 which defines the respective outlet end 13b thereof.

In any case, the first distribution ducts 19 and the second distribution ducts 20 are arranged so that the first channels 12 and the second adjacent channels 13 are never crossed by the same fluid.

On this point, it is to be noted that in the embodiment represented in the appended figures, all the first channels 12 and all the second channels 13 are crossed by the fluid to be heated and the combustion fumes, respectively. However, alternative embodiments are not excluded in which only a part of the first channels 12 and of the second channels 13 forming the matrix is used for the purposes of heat exchange and, therefore, crossed by the fluid to be heated and the combustion fumes, respectively. In any case, first channels 12 and second adjacent channels 13 are crossed respectively by the fluid to be heated and by the combustion fumes and never by the same fluid.

In a preferred embodiment, the feeding duct 15 of the other fluid (i.e. comburent fluid or gas) is housed for at least one segment of its length in the central tubular cavity of the exchanger-body 11 and is arranged substantially coaxially to the longitudinal axis A-A.

The outlet end 15b (combustion head) of the feeding duct 15 extends beyond the second baffle 24.

The inlet end 15a of the feeding duct 15 extends beyond the exhaust manifold 17 of the cold combustion fumes.

The inner side wall 26 of the exchanger-body 11 extends, advantageously, beyond the first baffle 23 extending along the whole exhaust manifold 17.

Between the feeding duct 15 and the inner side wall 26 a gap 27 remains defined in which fluids do not circulate and that is crossed by the feeding duct 15 and by devices for lighting or triggering the combustion and flame detection devices, not depicted or described in detail, being of the type known to a person skilled in the art.

The feeding manifold 16 of the fluid to be heated (air) comprises a tubular case 28, which is coaxial to the longitudinal axis A-A and which is arranged outside the first end 11a of the exchanger-body 11. The opposite bases of the tubular case 28 are comprised of walls 29 and 30 which sealingly connect to the outer side wall 25 of the exchanger-body 11 upstream of the first base 21 thereof and to the first baffle 23, respectively. The tubular case 28 then connects to a feeding pipe 31 of the fluid to be heated. Such feeding pipe 31 may be connected to the delivery of blower fans which feed the fluid to be heated (air) to the feeding manifold 16.

The volume VA internal to the feeding manifold 16 - volume VA which, in the embodiment shown, is delimited by the tubular case 28, by the wall 29 and by the wall 30 joined to the first baffle 23 - houses within it the first base 21 of the exchanger-body 11, at which the inlet ends 12a of the first channels 12 open.

The second distribution ducts 20 extend inside said volume VA extending beyond it so as to open with the respective outlet ends 13b into the exhaust manifold 17.

The exhaust manifold 17 of the cold combustion fumes is comprised of an annular box body that is delimited internally by the inner side wall 26, i.e. by an extension thereof, outside a tubular portion 32 and at the opposite bases from the first baffle 23 and an end wall 33 crossed by the feeding duct 15, respectively. The end wall 33 closes the annular gap 27 at one end.

The exhaust manifold 17 is then provided with an exhaust pipe 34 of the cold combustion fumes which can lead into the atmosphere or can be connected to the suction of suction fans.

The volume VS internal to the exhaust manifold 17 - volume VS which, in the embodiment shown, is delimited by the tubular portion 32, by the first baffle 23 and by the end wall 33 - houses within it the second distribution ducts 20 or better the respective terminal ends that define the outlet ends 13b of the second channels 13. In particular, the outlet ends 13b of the second channels 13 open in the volume VS at the first baffle 23.

The distribution manifold 18 of the heated fluid comprises a tubular body 34 that is coaxial to the longitudinal axis A-A and that extends from the second end 11b of the exchanger-body 11, at which it has a first wall at which the outlet ends 12b of the first channels 12 open. In the embodiment shown in the appended figures, such first wall is comprised of the second baffle 24.

The end of the tubular body 34 opposite said first wall (second baffle 24) has an annular base that is crossed by at least one central opening 35 coaxial to the longitudinal axis A-A and in fluid communication with the combustion chamber C-C.

The tubular body 34 has a truncated cone shape with conicity converging towards its annular base.

The volume VD internal to the distribution manifold 18

- volume VD which, in the embodiment shown in the appended figures, is delimited by the tubular portion 34, by the second baffle 24 and by the annular base of the tubular body 34 - houses within it the first distribution ducts 19 or better the terminal ends thereof that define the outlet ends 12b of the first channels 12. In particular, the outlet ends 12b of the first channels 12 open in the volume VD at the second baffle 24.

In a preferred embodiment, the burner 10 further comprises a flame tube 36 that is coaxial to the longitudinal axis A-A and that is in fluid communication with the distribution manifold 18 of the heated fluid, with the outlet end 15b (combustion head) of the feeding duct 15 of the other fluid and with the combustion chamber C-C.

With reference to the embodiment shown in the appended figures, the flame tube 36 is housed in the distribution manifold 18 and has axially opposite open ends: a first end is connected to the central opening 35, a second end houses within it the outlet end 15b (combustion head) of the feeding duct 15. Between the flame tube 36 and the outlet end 15b of the feeding duct 15 a passage clearance 37 remains defined for the passage through the same of at least a part of the heated fluid that fills the volume VD.

In a possible embodiment, the annular base of the tubular body 34 is crossed by a plurality of secondary openings 38 formed in radially external positions with respect to the central opening 35 and also being in fluid communication with the combustion chamber CC.

The burner 10 may further comprise a tubular housing 39 that is coaxial to the longitudinal axis A-A and in which at least one segment of the exchanger-body 11 is housed. In particular, the tubular housing 39 houses within it at least the segment of the exchanger-body 11 finishing in the second end 11b thereof.

The tubular housing 39 has an open end in fluid communication with the combustion chamber CC and the opposite end closed by a wall crossed by said exchanger-body. In the embodiment shown in the appended figures, such wall coincides with the wall 29 that delimits the feeding manifold 16 and that, advantageously, extends in an attachment flange.

Between the tubular housing 39 and the exchanger-body 11 a gap is defined for guiding the combustion fumes at the inlet to the second channels 13. The inlet ends 13a of the second channels 13 open in the volume VF of this guiding gap. The first distribution ducts 19 instead are housed in such volume VF without however being in direct communication therewith. In fact, the first distribution ducts 19 open in the volume VD internal to the distribution manifold 18.

The embodiment shown in the appended figures relates to a naked flame burner; in the case in which the burner is of the radiant tube type, the tubular housing 39 is comprised of the same radiant tube.

Advantageously, the burner 10 or at least parts of it are obtained as a single piece with additive manufacturing techniques (3D printing), die casting or the removal of shavings.

In particular, the exchanger-body 11 complete with any first distribution ducts 19 and/or any second distribution ducts 20 is obtained as a single piece in one body through additive manufacturing techniques, die casting or the removal of shavings.

If the burner 10 further comprises the distribution manifold 18 of the heated fluid and/or the flame tube, the exchanger-body 11 (complete with any first distribution ducts 19 and/or any second distribution ducts 20) the distribution manifold 18 and/or the flame tube are made as a single piece in one body through one of the techniques indicated above.

The burner 10 may be of the naked flame operation type, in which case the combustion chamber CC is comprised of the chamber 102 of the furnace.

The burner 10 may be of the radiant tube operation type, in which case a radiant tube forms the tubular housing 39 and delimits within it a closed volume constituting the combustion chamber CC.

The operation of the burner 10 according to the present invention is immediately comprehensible to a person skilled in the art in light of the description provided above and the appended figures. In short, with particular reference to the embodiment represented in the appended figures and in the case in which the fluid to be heated and the heated fluid is the comburent fluid and this is comprised of air, the fluid fed by the feeding duct 15 is the combustible fluid and this is comprised of gas and the heating fluid is comprised of combustion fumes, the operation of the burner 10 is described below.

Advantageously, the two fluids transit through the burner in the same direction but in opposite orientations:

- the fluid to be heated and the heated fluid (comburent fluid, air) enters the burner 10 in the rear part thereof (i.e. at the part external to the chamber 102 of the furnace), through the recuperator (heat exchanger) and exits from the front part of the burner 10 (i.e. the part of the burner facing towards the chamber 102);
- the heating fluid (combustion fumes), vice versa, enters the burner 10 from the front part of the burner 10, crosses the recuperator (heat exchanger) and exits from the rear part of the burner 10.

The fact that the burner 10 is equipped with a recuperator (heat exchanger) in counter-current is advantageous in terms of preheating efficiency.

At the "cold side" or rear side of the burner 10, the air to be heated is fed, through blower fans, into the feeding pipe 31 and from there into the volume VA internal to the feeding manifold 16.

The cold air that fills the volume VA laps the outside of the second distribution ducts 20 (which are crossed by the cold combustion fumes at the outlet) and is distributed in a substantially uniform way within the volume VA to enter the first channels 12 through the respective inlet ends 12a thereof.

The cold combustion fumes are conveyed, through second distribution ducts 20, into the volume VS internal to the exhaust manifold 17. The cold combustion fumes that fill the volume VS are extracted through the exhaust pipe 34 through relevant extraction systems such as, for example, suction fans or the like.

The negative pressure generated by such extraction systems allows all or a fraction of the hot combustion fumes contained in the combustion chamber CC to be suctioned from the combustion chamber CC into the volume VF defined by the gap delimited, on one side, by the tubular housing 39, and on the other side by the exchanger-body 11 complete with the distribution manifold 18.

The volume VF houses the first distribution ducts 19, inside which the hot air at the outlet from the first channels 12 flows, without however being directly in fluid communication therewith. The hot combustion fumes suctioned into the volume VF lap the outside of the first distribution ducts 19 without entering into contact with the hot air flowing therein.

The cold air that fills the volume VA enters into the first channels 12.

The hot combustion fumes that fill the volume VF enter into the second channels 13.

The volume VA internal to the feeding manifold 16 and the volume VF internal to the gap defined between the tubular housing 39 and at least one segment of the exchanger-body 11 are separated from each other by the wall 29. In this way, the cold air and the hot combustion fumes are separated without coming into contact with each other.

The number of first channels 12 crossed by the air, like the number of second channels 13 crossed by the fumes, is determined by the shape of the recuperator and by the quantity of hot combustion fumes suctioned. For example, in the case of naked flame operation, the quantity of hot combustion fumes suctioned by the combustion chamber CC may be less than the total.

The division of the channels of the exchanger-body 11 into first channels 12 and second channels 13 dedicated respectively to the flow of fluid to be heated (air) and to the flow of heating fluid (combustion fumes) is decided during the design of the burner 10 based on the number and distribution of the first distribution ducts 19 and of the second distribution ducts 20.

Such parameter may change as a function of the process requirements therefore the burner 10 is used and is fixed and determined during the design phase by the quantity of combustion fumes to be suctioned.

In any case, the division is performed so that the first channels 12 and the second channels 13 are distributed alternately from one another according to a matrix as described above.

The cold air flows along the first channels 12 from the inlet end 12a to the outlet end 12b thereof, exchanging heat with the hot combustion fumes that flow, in the opposite orientation, into the second channels 13 from the inlet end 13a to the outlet end 13b thereof.

The hot air exits from the first channels 12 through the respective first distribution ducts 19 that open, with the respective outlet ends 12b, in the volume VD internal to the distribution manifold 18.

The cold combustion fumes exit from the second channels 13 through the respective second distribution ducts 20 that open, with the respective outlet ends 13b, in the volume VS internal to the exhaust manifold 17.

The cold combustion fumes fill the volume VF internal to the exhaust manifold 17, from which they are evacuated through appropriate extraction systems.

The hot air that fills the volume VD internal to the distribution manifold 18 is divided into one or more zones or fractions before being placed in contact with the fuel for the development of the combustion reaction.

The fuel is fed through the feeding duct 15 and exits from the combustion head defined at the outlet end 15b of the latter.

Part of the hot air that fills the volume VD passes through the passage clearance 37 and enters into the volume internal to the flame tube 36 where it is mixed with the fuel which starts the combustion reaction.

The volume internal to the flame tube 36 therefore defines a combustion volume.

According to whether the secondary openings 38 are provided or not, the following operating modes are possible:

- If the secondary openings 38 are provided, the hot air in the volume VD is divided into two flows: one flow passes through the passage clearance 37 which is created between the combustion head and the flame tube 36. The quantity of air that passes in this passage clearance 37 is defined as primary and it fills the volume internal to the flame tube 36. Simultaneously, the fuel fed by the feeding duct 15 and exiting from the outlet end 15b thereof fills the volume internal to the flame tube 36. To trigger the combustion between the fuel and the air contained in such volume a trigger is necessary. Such trigger is represented by a trigger system (not shown in the figures) or simply by the temperature inside the flame tube 36, if it is greater than the autoignition temperature of the fuel. The flame that is generated is created with the primary flow of air and fuel; such combustion (known as primary combustion) takes place in sub-stoichiometric conditions, with excess fuel. Simultaneously to this primary combustion, the flow of air that is not defined through the passage clearance 37 passes through the secondary openings 38. Such flow of air is defined as secondary. The sub-stoichiometric flame exiting from the flame tube 36 and from here through the central opening 35 of the distribution manifold 18 expands in the combustion chamber CC where it meets and is mixed with the secondary flow of air. It follows that the total balance of the reaction is stoichiometric combustion or with a ratio such for which all the air completely burns the fuel injected into the burner.

- If the secondary openings 38 are not provided, the air contained in the volume VD passes completely through the passage clearance 37 filling the volume internal to the flame tube 36. Simultaneously, the fuel fed by the feeding duct 15 and exiting from the outlet end 15b thereof fills the volume internal to the flame tube 36. To trigger the combustion between the fuel and the air contained in such volume a trigger is necessary. Such trigger is represented by a trigger system (not shown in the figures) or simply by the temperature inside the flame tube 36, if it is greater than the autoignition temperature of the fuel. It follows that the reaction is stoichiometric combustion or with a ratio such for which all the air completely burns the fuel injected into the burner.

The combustion fumes generated by the combustion reaction are located in the combustion chamber CC which, as a function of the application of the burner 10, may be delimited by a radiant tube or defined by a fraction of the volume of the chamber 102 of the furnace.

In the first case (indirect heating of the chamber 102 through the radiant tube radiator 10), the combustion fumes that are suctioned in the recuperator that equips the burner 10 are the totality of those generated by the burner 10 itself.

In the second case (direct heating of the chamber 102 through the naked flame radiator 10), the combustion fumes that are suctioned into the recuperator that equips the burner 10 may be a fraction of the totality of those generated by the burner 10 itself or, in the presence of other burners, the suctioned fumes may be generated by other burners.

The furnace on which one or more burners 10 are installed is equipped with a heat regulation system which, in order to reach or maintain a certain temperature (output), controls the regulation system (input) so that the power dispensed by the burner or by the different burners is modulated.

Advantageously, the burner is able to be controlled in two different modes: the first is proportional or modulated regulation while the second is on/off or pulse regulation. In the first case, the power regulation is performed by changing the flow rate of fuel injected into the burner; therefore, to maintain the correct combustion ratio, the flow rate of comburent air is also changed and consequently the flow of combustion fumes generated (and the suctioned one).

In the second case, the burner works only at a fixed power (usually maximum power) in an on phase, which is alternated with a period in which the burner is turned off, the off phase. The weighted average flow of fuel during the on phase and the off phase with respect to the time in which the burner is on or off corresponds to the fuel flow rate required by the heat regulator.

The flow of combustion fumes suctioned is always proportional to the flow of comburent air fed.

The industrial recuperative burner, i.e. "self-recuperative", for industrial furnaces according to the present invention has the advantage of maximising the heat exchange surface area and, therefore, obtaining high heat exchange efficiency and improved performance, without changing the dimensions with respect to recuperative ("self-recuperative") burners of the known type.

In particular, the burner according to the present invention is integrated with a heat exchanger with alternate channels comprising a plurality of first channels crossed by the fluid to be heated and a plurality of second channels crossed by heating fluid, wherein the first channels and the second channels alternate with each other constituting a matrix in which each first channel always borders onto second channels and vice versa.

With respect to recuperative burners of the known type

- which are equipped with a heat exchanger with two annular chambers or a tube bundle, wherein the fluid to be heated flows into a single channel (annular chamber) or into a plurality of channels (tubes), while the heating fluid flows always and only in a single channel that surrounds the channel(s) in which the fluid to be heated flows - the burner according to the present invention is equipped with a heat exchanger provided with a plurality of first channels crossed by fluid to be heated and a plurality of second channels crossed by heating fluid, wherein the first channels always border and are surrounded by the second channels and vice versa.

By way of non-limiting example, considering Figure 7, and referring to an ideal heat exchanger with a square cross section, unit length, divided into a plurality of first channels and into a plurality of second channels of equal square cross section and separated from one another by separating walls of null thickness, it is possible to calculate the following values:

$$A = 1 * m$$

$$Sect. = 1^2$$

$$1 = L/n$$

$$m = 2n^2 - 2n$$

$$V = Q / sect. / n^2$$

Where:

A: total heat exchange surface area
m = number of bordering sides between the first and second channels
L = total length of one side of the exchanger i.e. of the related matrix of first and second channels
l = length of the side of each first and second channel
n = number of first and second channels per side of the matrix Sect. = passage section of each first and second channel
V = speed
Q = flow of fluids crossing the first and second channels Considering Figure 7, with the same dimensions and outer side it follows that:

- In the case of a matrix with 4 channels: L=200 mm, n=2, l=L/n=100mm, m=4; Sect.=10000mm$^2$, A=400 $\underline{mm^2}$.
- In the case of a matrix with 64 channels: L=200 mm, n=8, l=L/n=25mm, m=112; Sect.=625mm$^2$, A=2800 $\overline{\underline{mm^2}}$.

It is clear that, without changing the dimensions, the heat exchanger with sixty-four (64) channels has an exchange surface area that is seven times higher than the one with four (4) channels. It is clear that these considerations are made without considering the thickness of the walls. For the same reason, the sum of the sections of the two exchangers is equal; it follows that with the same flow rate the speed of the fluid remains the same.
The industrial recuperative burner, i.e. "self-recuperative", for industrial furnaces according to the present invention has the advantage of maximising the heat transfer coefficient (NTU) without changing the dimensions with respect to recuperative ("self-recuperative") burners of the known type.
For example, it has been noted that it is possible to reach heat transfer coefficient values (NTU) greater than and equal to 3.5 with respect to values equal to 1-1.3 typical of known self-recuperative burners with two annular chambers (with fins on the heat exchange surfaces) and values of 3-3.5 typical of known tube bundle self-recuperative burners, therefore to reach values proximal to those of known regenerative type burners that have NTU values greater than or equal to 4 and that to date represent the best technology in terms of on-board integrated heat exchange.
The industrial recuperative burner, i.e. "self-recuperative", for industrial furnaces according to the present invention has the advantage of minimising pressure losses of the recuperator (heat exchanger) that equips it with respect to recuperative ("self-recuperative") burners of the known type.

Advantageously, the heat exchanger that equips the industrial recuperative burner according to the present invention is an integral part of the burner itself.

The industrial recuperative burner according to the present invention or at least parts of it may be produced with additive manufacturing techniques (3D printing), die casting or the removal of shavings; in particular, the recuperator comprising the exchanger-body complete with the first and second distribution ducts and constituent parts of the burner such as, in particular, the distribution manifold of the heated fluid and/or the flame tube may be obtained as a single part in one body.

If the burner and/or the recuperator that equips it or parts of it are produced with additive manufacturing techniques (3D printing) it is possible to differentiate the material that constitutes the heat exchanger, both longitudinally and transversally with the aim of matching the best material in terms of heat exchange to the local operating temperature at which it is used.

Obtaining the burner and/or the recuperator that equips it or parts of it with additive manufacturing techniques (3D printing) further makes it possible to:

- make the internal surfaces to the first and second channels with roughness having a controlled size and shape to maximise the heat exchange and emissivity of the surface itself;
- differentiate the shape of the cross section of the first and second channels which, for example, may be triangular, square, trapezoidal, round, or generally polyhedral, also along the longitudinal extension thereof;
- differentiate the shape of the cross section of the first channels with respect to that of the second channels;
- differentiate the longitudinal extension of the first channels and of the second channels which, for example, may be rectilinear, curved, spiral-shaped, etc.

The industrial recuperative burner according to the present invention can be used both for naked flame operation and for radiant tube operation.

The industrial recuperative burner according to the present invention can be used to preheat comburent air, using the combustion fumes generated by the combustion of the same preheated comburent air and fuel as the heating fluid.

The industrial recuperative burner according to the present invention can also be used to preheat the combustible fluid, using the combustion fumes generated by the combustion of the preheated combustible fluid and by the comburent fluid as the heating fluid.

The shape of the burner, the recuperator and therefore the matrix of first and second channels can vary as a function of the shape and available space for housing the burner; usually such shape may be round, elliptical, rectangular, square, triangular or a circular crown.

The shape of the first and second channels of the recuperator (heat exchanger) is such as to maximise the passage section of the two fluids and reduce to a minimum the thickness of the separating walls. The thickness of the walls is of significant importance in the transitory operating steps of the burner during which the thermal inertia of the walls must be minimal; such step is usually the one in which the burner works in on/off mode and the two fluids flow through the exchanger simultaneously and intermittently.

The industrial recuperative burner for industrial furnaces as conceived herein is susceptible to many modifications and variations, all falling within the invention; furthermore, all the details are replaceable by technically equivalent elements. In practice, the materials used, as well as their dimensions, can be of any type according to the technical requirements.

**Claims**

1. Industrial recuperative burner (10) for industrial furnaces, wherein said burner (10) is configured to be mounted on a wall (100) of an industrial furnace so that said burner (10) extends at least partially through an opening (101) formed in said wall of said furnace, said wall (100) delimiting a chamber (102) of the furnace, comprising:

   - a recuperator configured to heat one fluid selected among a combustible fluid and an comburent fluid by means of the heat of the combustion fumes generated by the combustion of said combustible fluid and of said comburent fluid, wherein said recuperator comprises:

     - an exchanger-body (11) for the heat exchange between said one fluid to be heated and said combustion fumes, said exchanger-body (11) extending longitudinally along a longitudinal axis (A-A) between a first end (11a) and a second end (11b), which are axially opposite one another,

- a matrix that is formed in said exchanger-body (11) and that consists of a plurality of first channels (12), which are crossed by said fluid to be heated, and of a plurality of second channels (13), which are crossed by said combustion fumes, wherein
- said first channels (12) and said second channels (13) extend along the longitudinal extension of said exchanger-body between said first end (11a) and said second end (11b) thereof and are separated from one another by separating walls (14), and wherein
- each separating wall (14) that separates mutually adjacent first channels (12) and second channels (13) borders, on one side, at least one of said first channels (12) and, on the other side, at least one of said second channels (13), and

- at least one feeding duct (15) for feeding the other fluid selected from said comburent fluid and said combustible fluid, wherein said feeding duct (15) has an inlet end (15a) associable with a source of said other fluid and an outlet end (15b) in fluid communication with a combustion chamber (CC),

**characterized in that** said firs channels (12) and said second channels (14) are arranged alternately with one another along a plurality of lines and along a plurality of columns forming, in transverse planes to said longitudinal axis (A-A) a chessboard matrix.

2. Burner (10) according to claim 1, **characterised in that**:

- each of said first channels (12) has an inlet end (12a) for the inlet of said fluid to be heated and that is in fluid communication with a feeding manifold (16) of said fluid to be heated and an outlet end (12b) for the outlet of the heated fluid and that is in fluid communication with said combustion chamber (CC),
- each of said second channels (13) has an inlet end (13a) for the inlet of said combustion fumes and that is in fluid communication with said combustion chamber (CC) and an outlet end (13b) for the outlet of said combustion fumes and that is in fluid communication with an exhaust manifold (17) of said combustion fumes.

3. Burner (10) according to claim 2, **characterised in that** said first channels (12) extend beyond the inlet end (13a) and/or the outlet end (13b) of said second channels (13) in respective first distribution ducts (19) that end in the inlet end (12a) or in the outlet end (12b) of said first channels.

4. Burner (10) according to claim 2 or 3, **characterised in that** said second channels (13) extend beyond the inlet end (12a) and/or the outlet end (12b) of said first channels (12) in respective second distribution ducts (20) that end in the inlet end (13a) or in the outlet end (13b) of said second channels.

5. Burner (10) according to claims 3 and 4, **characterised in that** said exchanger-body (11) has:

- at said first end (11a) thereof, a first base (21) that is substantially transversal to said longitudinal axis (A-A) and at which the inlet ends (12a) or the outlet ends (12b) of said first channels (12) open and beyond which said second channels (13) extend in said respective second distribution ducts (20) ending in the inlet end (13a) or in the outlet end (13b) of said second channels, or vice-versa and
- at said second end (11b) thereof, a second base (22) that is substantially transversal to said longitudinal axis (A-A) and at which the inlet ends (13a) or the outlet ends (13b) of said second channels (13) open and beyond which said first channels (12) extend in said respective first distribution ducts (19) ending in the inlet end (12a) or in the outlet end (12b) of said first channels (12), or vice-versa.

6. Burner (10) according to claim 5, **characterised in that** said first channels (12) and said second channels (13) are respectively crossed by said fluid to be heated and by said combustion fumes in counter-current, wherein

- said inlet end (12a) of said first channels (12) and said outlet end (13b) of said second channels (13) are formed at said first end (11a) of said exchanger-body (11), said second channels (13) extending for at least one segment of their length in respective said second distribution ducts (20) that extend beyond the inlet end (12a) of said first channels (12) and that end in said outlet ends (13b) of said second channels (13),
- said inlet end (13a) of said second channels (13) and said outlet end (12b) of said first channels (12) are formed at said second end (11b) of said exchanger-body (11), said first channels (12) extending for at least one segment of their length in said respective first distribution ducts (19) that extend beyond the inlet end (13a) of said second channels (13) and that end in said outlet ends (12b) of said first channels.

**7.** Burner (10) according to one or more of the previous claims, **characterised in that** said exchanger-body (11) comprises an outer side wall (25), that delimits it laterally and externally, and a central tubular cavity, which is coaxial to said longitudinal axis (A-A) and which defines an inner side wall (26) of said exchanger-body, wherein said matrix is formed between said outer side wall (25) and said inner side wall (26), said at least one feeding duct (15) of said other fluid is housed for at least one segment of its length in said central tubular cavity of said exchanger-body (11) and is arranged substantially coaxial to said longitudinal axis (A-A) .

**8.** Burner (10) according to one or more of the previous claims, **characterised in that** said exchanger-body (11) is made in one piece in a single body.

**9.** Burner (10) according to one or more of claims 2 to 8, **characterised in that** it comprises a distribution manifold (18) of said heated fluid that is in fluid communication with the outlet ends (12b) of said first channels (12) and with said combustion chamber (CC).

**10.** Burner (10) according to claim 9, **characterised in that** said distribution manifold (18) of said heated fluid comprises a tubular body (34) coaxial to said longitudinal axis (A-A) and that extends from said first end (11a) or from said second end (11b) of said exchanger-body, at which it has a first wall at which the outlet ends (12b) of said first channels (12) open, the end of said tubular body (34) opposite to said first wall having at least one central opening (35) coaxial to said longitudinal axis (A-A) and in fluid communication with said combustion chamber (CC).

**11.** Burner (10) according to claim 9 or 10, **characterised in that** it comprises a flame tube (36) that is coaxial to said longitudinal axis (A-A) and that is in fluid communication with said distribution manifold (18) of said heated fluid, with said outlet end (15b) of said feeding duct (15) of said other fluid and with said combustion chamber (CC) .

**12.** Burner (10) according to claim 11, **characterised in that** said flame tube (36) is housed in said distribution manifold (18) of said heated fluid and has the axially opposite ends open, wherein said feeding duct (15) of said other fluid has said outlet end (15b) thereof arranged inside said flame tube (36), a passage port (37) for the passage through it of at least one part of said heated fluid being defined between said flame tube (36) and said feeding duct (15) .

**13.** Burner (10) according to claim 10 and claim 11 or 12, **characterised in that** said tubular body (34) has, at said end thereof opposite to said first wall, a plurality of secondary openings (38) formed in radially outer positions with respect to said central opening (35).

**14.** Burner (10) according to one or more of claims 11 to 13, **characterised in that** said exchanger-body (11), said distribution manifold (18) of said heated fluid and said flame tube (36) are made in one piece in a single body through additive production techniques.

**15.** Burner (10) according to one or more of the previous claims, **characterised in that** it comprises a tubular housing (39) that is coaxial to said longitudinal axis (A-A) and in which said exchanger-body (11) is housed for at least one segment, wherein said tubular housing (39) has an end in fluid communication with said combustion chamber (CC) and the opposite end closed by a wall crossed by said exchanger-body, a gap for guiding the combustion fumes in inlet to said second channels (13) being defined between said tubular housing (39) and said exchanger-body.

**16.** Burner (10) according to one or more of the previous claims, **characterised in that**, in any axial trunk of the exchanger-body (11), the net thermal power exchanged between each first channel (12) and each second channel (13) is, in absolute value, the same.

**Patentansprüche**

**1.** Industrieller Rekuperatorbrenner (10) für Industrieöfen, wobei der Brenner (10) so konfiguriert ist, um an einer Wand (100) eines Industrieofens montiert zu werden, so dass sich der Brenner (10) mindestens teilweise durch eine Öffnung (101) erstreckt, die in der Wand des Ofens ausgebildet ist, wobei die Wand (100) eine Kammer (102) des Ofens begrenzt, umfassend:

- einen Rekuperator, der so konfiguriert ist, dass er ein Fluid, das aus einem brennbaren Fluid und einem Verbrennungsfluid ausgewählt wird, mit Hilfe der Wärme der Verbrennungsabgase, die durch die Verbrennung des brennbaren Fluids und des Verbrennungsfluids erzeugt werden, erwärmt, wobei der Rekuperator umfasst:

- einen Austauscherkörper (11) für den Wärmeaustausch zwischen dem einen zu erwärmenden Fluid und den Verbrennungsabgasen, wobei sich der Austauscherkörper (11) in Längsrichtung entlang einer Längsachse (A-A) zwischen einem ersten Ende (11a) und einem zweiten Ende (11b) erstreckt, die einander axial gegenüberliegen,

- eine Matrix, die in dem Austauscherkörper (11) ausgebildet ist und aus einer Vielzahl von ersten Kanälen (12), die von dem zu erhitzenden Fluid durchströmt werden, und aus einer Vielzahl von zweiten Kanälen (13), die von den Verbrennungsabgasen durchströmt werden, besteht, wobei

- die ersten Kanäle (12) und die zweiten Kanäle (13) sich entlang der Längserstreckung des Austauscherkörpers zwischen dem ersten Ende (11a) und dem zweiten Ende (11b) desselben erstrecken und durch Trennwände (14) voneinander getrennt sind, und wobei

- jede Trennwand (14), die aneinander angrenzende erste Kanäle (12) und zweite Kanäle (13) trennt, auf einer Seite an mindestens einen der ersten Kanäle (12) und auf der anderen Seite an mindestens einen der zweiten Kanäle (13) grenzt, und

- mindestens eine Zuführungsleitung (15) zum Zuführen des anderen Fluids, das aus dem Verbrennungsfluid und dem brennbaren Fluid ausgewählt ist, wobei die Zuführungsleitung (15) ein Einlassende (15a), das mit einer Quelle des anderen Fluids verbindbar ist, und ein Auslassende (15b) in Fluidverbindung mit einer Brennkammer (CC) aufweist, **dadurch gekennzeichnet, dass** die ersten Kanäle (12) und die zweiten Kanäle (14) abwechselnd miteinander entlang einer Vielzahl von Linien und entlang einer Vielzahl von Spalten angeordnet sind, die in Querebenen zu der Längsachse (A-A) eine Schachbrettmatrix bilden.

2. Brenner (10) nach Anspruch 1, **dadurch gekennzeichnet, dass**:

- jeder der ersten Kanäle (12) ein Einlassende (12a) für den Einlass des zu erhitzenden Fluids aufweist, das in Fluidverbindung mit einer Zuführungssammelleitung (16) des zu erhitzenden Fluids steht, und ein Auslassende (12b) für den Auslass des erhitzten Fluids aufweist, das in Fluidverbindung mit der Brennkammer (CC) steht,

- jeder der zweiten Kanäle (13) ein Einlassende (13a) für den Einlass der Verbrennungsabgase aufweist, das in Fluidverbindung mit der Brennkammer (CC) steht, und ein Auslassende (13b) für den Auslass der Verbrennungsabgase aufweist, das in Fluidverbindung mit einer Abgassammelleitung (17) für die Verbrennungsabgase steht.

3. Brenner (10) nach Anspruch 2, **dadurch gekennzeichnet, dass** sich die ersten Kanäle (12) über das Einlassende (13a) und/oder das Auslassende (13b) der zweiten Kanäle (13) hinaus in jeweilige erste Verteilerkanäle (19) erstrecken, die in dem Einlassende (12a) oder in dem Auslassende (12b) der ersten Kanäle enden.

4. Brenner (10) nach Anspruch 2 oder 3, **dadurch gekennzeichnet, dass** sich die zweiten Kanäle (13) über das Einlassende (12a) und/oder das Auslassende (12b) der ersten Kanäle (12) hinaus in jeweilige zweite Verteilerkanäle (20) erstrecken, die in dem Einlassende (13a) oder in dem Auslassende (13b) der zweiten Kanäle enden.

5. Brenner (10) nach den Ansprüchen 3 und 4, **dadurch gekennzeichnet, dass** der Austauscherkörper (11) aufweist:

- an seinem ersten Ende (11a) eine erste Basis (21), die im Wesentlichen quer zu der Längsachse (A-A) verläuft und an der die Einlassenden (12a) oder die Auslassenden (12b) der ersten Kanäle (12) münden und über die hinaus die zweiten Kanäle (13) in den jeweiligen zweiten Verteilerkanälen (20) verlaufen, die in dem Einlassende (13a) oder in dem Auslassende (13b) der zweiten Kanäle enden, oder umgekehrt, und

- an seinem zweiten Ende (11b) eine zweite Basis (22), die im Wesentlichen quer zu der Längsachse (A-A) verläuft und an der die Einlassenden (13a) oder die Auslassenden (13b) der zweiten Kanäle (13) münden und über die hinaus sich die ersten Kanäle (12) in den jeweiligen ersten Verteilerkanälen (19) erstrecken, die in dem Einlassende (12a) oder in dem Auslassende (12b) der ersten Kanäle (12) enden, oder umgekehrt.

6. Brenner (10) nach Anspruch 5, **dadurch gekennzeichnet, dass** die ersten Kanäle (12) und die zweiten Kanäle (13) jeweils von dem zu erhitzenden Fluid und von den Verbrennungsabgasen im Gegenstrom durchströmt werden, wobei

- das Einlassende (12a) der ersten Kanäle (12) und das Auslassende (13b) der zweiten Kanäle (13) an dem ersten Ende (11a) des Austauscherkörpers (11) ausgebildet sind, wobei sich die zweiten Kanäle (13) über mindestens ein Segment ihrer Länge in den jeweiligen zweiten Verteilerkanälen (20) erstrecken, die sich über das Einlassende (12a) der ersten Kanäle (12) hinaus erstrecken und in den Auslassenden (13b) der zweiten Kanäle (13) enden,

- das Einlassende (13a) der zweiten Kanäle (13) und das Auslassende (12b) der ersten Kanäle (12) an dem zweiten Ende (11b) des Austauscherkörpers (11) ausgebildet sind, wobei sich die ersten Kanäle (12) über mindestens ein Segment ihrer Länge in den jeweiligen ersten Verteilerkanälen (19) erstrecken, die sich über das Einlassende (13a) der zweiten Kanäle (13) hinaus erstrecken und in den Auslassenden (12b) der ersten Kanäle enden.

7. Brenner (10) nach einem oder mehreren der vorstehenden Ansprüche, **dadurch gekennzeichnet, dass** der Austauscherkörper (11) eine äußere Seitenwand (25), die ihn seitlich und außen begrenzt, und einen zentralen rohrförmigen Hohlraum umfasst, der koaxial zu der Längsachse (A-A) verläuft und der eine innere Seitenwand (26) des Austauscherkörpers definiert, wobei die Matrix zwischen der äußeren Seitenwand (25) und der inneren Seitenwand (26) ausgebildet wird, die mindestens eine Zuführungsleitung (15) des anderen Fluids über mindestens ein Segment ihrer Länge in dem zentralen rohrförmigen Hohlraum des Austauscherkörpers (11) untergebracht ist und im Wesentlichen koaxial zu der Längsachse (A-A) angeordnet ist.

8. Brenner (10) nach einem oder mehreren der vorstehenden Ansprüche, **dadurch gekennzeichnet, dass** der Austauscherkörper (11) einstückig in einem einzigen Körper hergestellt ist.

9. Brenner (10) nach einem oder mehreren der Ansprüche 2 bis 8, **dadurch gekennzeichnet, dass** er eine Verteilersammelleitung (18) des erhitzten Fluids umfasst, das in Fluidverbindung mit den Auslassenden (12b) der ersten Kanäle (12) und mit der Brennkammer (CC) steht.

10. Brenner (10) nach Anspruch 9, **dadurch gekennzeichnet, dass** die Verteilersammelleitung (18) des erhitzten Fluids einen rohrförmigen Körper (34) umfasst, der koaxial zu der Längsachse (A-A) verläuft und sich von dem ersten Ende (11a) oder von dem zweiten Ende (11b) des Austauscherkörpers erstreckt, an dem er eine erste Wand aufweist, an der die Auslassenden (12b) der ersten Kanäle (12) münden, wobei das Ende des rohrförmigen Körpers (34), das der ersten Wand gegenüberliegt, mindestens eine zentrale Öffnung (35) aufweist, die koaxial zu der Längsachse (A-A) verläuft und in Fluidverbindung mit der Brennkammer (CC) steht.

11. Brenner (10) nach Anspruch 9 oder 10, **dadurch gekennzeichnet, dass** er ein Flammrohr (36) umfasst, das koaxial zur Längsachse (A-A) verläuft und in Fluidverbindung mit der Verteilersammelleitung (18) des erhitzten Fluids, mit dem Auslassende (15b) der Zuführungsleitung (15) des anderen Fluids und mit der Brennkammer (CC) steht.

12. Brenner (10) nach Anspruch 11, **dadurch gekennzeichnet, dass** das Flammrohr (36) in der Verteilersammelleitung (18) des erhitzten Fluids untergebracht ist und die axial gegenüberliegenden Enden offen sind, wobei das Auslassende (15b) der Zuführungsleitung (15) des anderen Fluids innerhalb des Flammrohrs (36) angeordnet ist und eine Durchgangsöffnung (37) für den Durchgang von mindestens einem Teil des erhitzten Fluids zwischen dem Flammrohr (36) und der Zuführungsleitung (15) definiert ist.

13. Brenner (10) nach Anspruch 10 und Anspruch 11 oder 12, **dadurch gekennzeichnet, dass** der rohrförmige Körper (34) an seinem der ersten Wand gegenüberliegenden Ende eine Vielzahl von sekundären Öffnungen (38) aufweist, die in radial äußeren Positionen in Bezug auf die zentrale Öffnung (35) ausgebildet sind.

14. Brenner (10) nach einem oder mehreren der Ansprüche 11 bis 13, **dadurch gekennzeichnet, dass** der Austauscherkörper (11), die Verteilersammelleitung (18) des erhitzten Fluids und das Flammrohr (36) einstückig in einem einzigen Körper durch additive Fertigungstechniken hergestellt sind.

15. Brenner (10) nach einem oder mehreren der vorstehenden Ansprüche, **dadurch gekennzeichnet, dass** er ein rohrförmiges Gehäuse (39) umfasst, das koaxial zu der Längsachse (A-A) verläuft und in dem der Austauscherkörper (11) für mindestens ein Segment untergebracht ist, wobei das rohrförmige Gehäuse (39) ein Ende in Fluidverbindung mit der Brennkammer (CC) aufweist und das gegenüberliegende Ende durch eine Wand verschlossen ist, die von dem Austauscherkörper durchquert wird, wobei ein Spalt zum Leiten der Verbrennungsabgase am Einlass zu den zweiten Kanälen (13) zwischen dem rohrförmigen Gehäuse (39) und dem Austauscherkörper definiert ist.

16. Brenner (10) nach einem oder mehreren der vorstehenden Ansprüche, **dadurch gekennzeichnet, dass** die zwischen jedem ersten Kanal (12) und jedem zweiten Kanal (13) ausgetauschte Nettowärmeleistung in jedem Axialstamm des Austauscherkörpers (11) absolut gesehen gleich ist.

**Revendications**

1.  Brûleur industriel à récupération (10) pour fourneaux industriels, dans lequel ledit brûleur (10) est configuré pour être monté sur une paroi (100) d'un fourneau industriel de sorte que ledit brûleur (10) s'étend au moins partiellement à travers une ouverture (101) formée dans ladite paroi dudit fourneau, ladite paroi (100) délimitant une chambre (102) du fourneau, comprenant :

    - un récupérateur configuré pour chauffer un fluide sélectionné parmi un fluide combustible et un fluide comburant au moyen de la chaleur des fumées de combustion générées par la combustion dudit fluide combustible et dudit fluide comburant, dans lequel ledit récupérateur comprend :

        - un corps échangeur (11) pour l'échange de chaleur entre ledit un fluide devant être chauffé et lesdites fumées de combustion, ledit corps échangeur (11) s'étendant longitudinalement le long d'un axe longitudinal (A-A) entre une première extrémité (11a) et une seconde extrémité (11b), qui sont axialement opposées l'une à l'autre,
        - une matrice qui est formée dans ledit corps échangeur (11) et qui est constituée d'une pluralité de premiers canaux (12), qui sont parcourus par ledit fluide devant être chauffé, et d'une pluralité de seconds canaux (13), qui sont parcourus par lesdites fumées de combustion, où
        - lesdits premiers canaux (12) et lesdits seconds canaux (13) s'étendent le long de l'extension longitudinale dudit corps échangeur entre ladite première extrémité (11a) et ladite seconde extrémité (11b) de celui-ci, et sont séparés les uns des autres par des parois de séparation (14), et dans lequel
        - chaque paroi de séparation (14) qui sépare des premiers canaux (12) et des seconds canaux (13) mutuellement adjacents borde, sur un côté, au moins l'un desdits premiers canaux (12) et, sur l'autre côté, au moins l'un desdits seconds canaux (13), et
        - au moins un conduit d'apport (15) pour apporter l'autre fluide sélectionné parmi ledit fluide comburant et ledit fluide combustible, dans lequel ledit conduit d'apport (15) possède une extrémité d'entrée (15a) apte à être associée à une source dudit autre fluide et une extrémité de sortie (15b) en communication fluidique avec une chambre de combustion (CC), **caractérisé en ce que** lesdits premiers canaux (12) et lesdits seconds canaux (14) sont agencés en alternance les uns avec les autres le long d'une pluralité de lignes et le long d'une pluralité de colonnes formant, dans des plans transversaux audit axe longitudinal (A-A), une matrice en échiquier.

2.  Brûleur (10) selon la revendication 1, **caractérisé en ce que** :

    - chacun desdits premiers canaux (12) possède une extrémité d'entrée (12a) pour l'entrée dudit fluide devant être chauffé et qui est en communication fluidique avec un collecteur d'apport (16) dudit fluide devant être chauffé et une extrémité de sortie (12b) pour la sortie du fluide chauffé et qui est en communication fluidique avec ladite chambre de combustion (CC),
    - chacun desdits seconds canaux (13) possède une extrémité d'entrée (13a) pour l'entrée desdites fumées de combustion et qui est en communication fluidique avec ladite chambre de combustion (CC) et une extrémité de sortie (13b) pour la sortie desdites fumées de combustion et qui est en communication fluidique avec un collecteur d'échappement (17) desdites fumées de combustion,

3.  Brûleur (10) selon la revendication 2, **caractérisé en ce que** lesdits premiers canaux (12) s'étendent au-delà de l'extrémité d'entrée (13a) et/ou de l'extrémité de sortie (13b) desdits seconds canaux (13) dans des premiers conduits de distribution (19) respectifs qui se terminent dans l'extrémité d'entrée (12a) ou dans l'extrémité de sortie (12b) desdits premiers canaux.

4.  Brûleur (10) selon la revendication 2 ou 3, **caractérisé en ce que** lesdits seconds canaux (13) s'étendent au-delà de l'extrémité d'entrée (12a) et/ou de l'extrémité de sortie (12b) desdits premiers canaux (12) dans des seconds conduits de distribution (20) respectifs qui se terminent dans l'extrémité d'entrée (13a) ou dans l'extrémité de sortie (13b) desdits seconds canaux.

5.  Brûleur (10) selon les revendications 3 et 4, **caractérisé en ce que** ledit corps échangeur (11) possède :

    - au niveau de ladite première extrémité (11a) de celui-ci, une première base (21) qui est sensiblement transversale audit axe longitudinal (A-A) et au niveau de laquelle les extrémités d'entrée (12a) ou les extrémités de sortie (12b) desdits premiers canaux (12) débouchent et au-delà de laquelle lesdits seconds canaux (13) s'étendent dans lesdits seconds conduits de distribution (20) respectifs se terminant dans l'extrémité d'entrée (13a) ou dans l'extrémité de sortie (13b) desdits seconds canaux, ou vice-versa et

- au niveau de ladite seconde extrémité (11b) de celui-ci, une seconde base (22) qui est sensiblement transversale audit axe longitudinal (A-A) et au niveau de laquelle les extrémités d'entrée (13a) ou les extrémités de sortie (13b) desdits seconds canaux (13) débouchent et au-delà de laquelle lesdits premiers canaux (12) s'étendent dans lesdits premiers conduits de distribution (19) respectifs se terminant dans l'extrémité d'entrée (12a) ou dans l'extrémité de sortie (12b) desdits premiers canaux (12), ou vice-versa.

6.  Brûleur (10) selon la revendication 5, **caractérisé en ce que** lesdits premiers canaux (12) et lesdits seconds canaux (13) sont respectivement parcourus par ledit fluide devant être chauffé et par lesdites fumées de combustion à contre-courant, dans lequel

    - ladite extrémité d'entrée (12a) desdits premiers canaux (12) et ladite extrémité de sortie (13b) desdits seconds canaux (13) sont formées à ladite première extrémité (11a) dudit corps échangeur (11), lesdits seconds canaux (13) s'étendant sur au moins un segment de leur longueur dans lesdits seconds conduits de distribution (20) respectifs qui s'étendent au-delà de l'extrémité d'entrée (12a) desdits premiers canaux (12) et qui se terminent dans lesdites extrémités de sortie (13b) desdits seconds canaux (13),
    - ladite extrémité d'entrée (13a) desdits seconds canaux (13) et ladite extrémité de sortie (12b) desdits premiers canaux (12) sont formées à ladite seconde extrémité (11b) dudit corps échangeur (11), lesdits premiers canaux (12) s'étendant sur au moins un segment de leur longueur dans lesdits premiers conduits de distribution (19) respectifs qui s'étendent au-delà de l'extrémité d'entrée (13a) desdits seconds canaux (13) et qui se terminent dans lesdites extrémités de sortie (12b) desdits premiers canaux.

7.  Brûleur (10) selon l'une ou plusieurs des revendications précédentes, **caractérisé en ce que** ledit corps échangeur (11) comprend une paroi latérale externe (25), qui le délimite latéralement et extérieurement, et une cavité tubulaire centrale, qui est coaxiale audit axe longitudinal (A-A) et qui définit une paroi latérale interne (26) dudit corps échangeur, dans lequel ladite matrice est formée entre ladite paroi latérale externe (25) et ladite paroi latérale interne (26), ledit au moins un conduit d'apport (15) dudit autre fluide est logé sur au moins un segment de sa longueur dans ladite cavité tubulaire centrale dudit corps échangeur (11) et est agencé de manière sensiblement coaxiale audit axe longitudinal (A-A).

8.  Brûleur (10) selon l'une ou plusieurs des revendications précédentes, **caractérisé en ce que** ledit corps échangeur (11) est formé en monobloc en un seul corps.

9.  Brûleur (10) selon l'une ou plusieurs des revendications 2 à 8, **caractérisé en ce qu'**il comprend un collecteur de distribution
    (18) dudit fluide chauffé qui est en communication fluidique avec les extrémités de sortie (12b) desdits premiers canaux (12) et avec ladite chambre de combustion (CC).

10. Brûleur (10) selon la revendication 9, **caractérisé en ce que** ledit collecteur de distribution (18) dudit fluide chauffé comprend un corps tubulaire (34) coaxial audit axe longitudinal (A-A) et qui s'étend à partir de ladite première extrémité (11a) ou à partir de ladite seconde extrémité (11b) dudit corps échangeur, au niveau de laquelle il possède une première paroi au niveau de laquelle les extrémités de sortie (12b) desdits premiers canaux (12) débouchent, l'extrémité dudit corps tubulaire (34) opposée à ladite première paroi ayant au moins une ouverture centrale (35) coaxiale audit axe longitudinal (A-A) et en communication fluidique avec ladite chambre de combustion (CC).

11. Brûleur (10) selon la revendication 9 ou 10, **caractérisé en ce qu'**il comprend un tube-foyer (36) qui est coaxial audit axe longitudinal (A-A) et qui est en communication fluidique avec ledit collecteur de distribution (18) dudit fluide chauffé, avec ladite extrémité de sortie (15b) dudit conduit d'apport (15) dudit autre fluide et avec ladite chambre de combustion (CC).

12. Brûleur (10) selon la revendication 11, **caractérisé en ce que** ledit tube-foyer (36) est logé dans ledit collecteur de distribution (18) dudit fluide chauffé et possède les extrémités axialement opposées ouvertes, dans lequel ledit conduit d'apport (15) dudit autre fluide possède ladite extrémité de sortie (15b) de celui-ci agencée à l'intérieur dudit tube-foyer (36), un orifice de passage (37) pour le passage à travers celui-ci d'au moins une partie dudit fluide chauffé étant défini entre ledit tube-foyer (36) et ledit conduit d'apport (15).

13. Brûleur (10) selon la revendication 10 et la revendication 11 ou 12, **caractérisé en ce que** ledit corps tubulaire (34) possède, à ladite extrémité de celui-ci opposée à ladite première paroi, une pluralité d'ouvertures secondaires (38) formées dans des positions radialement externes par rapport à ladite ouverture centrale (35).

14. Brûleur (10) selon l'une ou plusieurs des revendications 11 à 13, **caractérisé en ce que** ledit corps échangeur (11), ledit collecteur de distribution (18) dudit fluide chauffé et ledit tube-foyer (36) sont formés en monobloc en un seul corps par le biais de techniques de fabrication additive.

15. Brûleur (10) selon l'une ou plusieurs des revendications précédentes, **caractérisé en ce qu'**il comprend un logement tubulaire (39) qui est coaxial audit axe longitudinal (A-A) et dans lequel ledit corps échangeur (11) est logé sur au moins un segment, dans lequel ledit logement tubulaire (39) possède une extrémité en communication fluidique avec ladite chambre de combustion (CC) et l'extrémité opposée fermée par une paroi traversée par ledit corps échangeur, un espace pour guider les fumées de combustion en entrée vers lesdits seconds canaux (13) étant défini entre ledit logement tubulaire (39) et ledit corps échangeur.

16. Brûleur (10) selon l'une ou plusieurs des revendications précédentes, **caractérisé en ce que**, dans un quelconque tronc axial du corps échangeur (11), la puissance thermique nette échangée entre chaque premier canal (12) et chaque second canal (13) est, en valeur absolue, identique.

Fig. 1

EP 3 749 896 B2

Fig. 2

Fig. 3a

Fig. 3b

Fig. 4

EP 3 749 896 B2

Fig. 5

EP 3 749 896 B2

# Fig. 6

EP 3 749 896 B2

Fig. 7

|  |  | Centralised recovery unit | Recovery unit on board the burner | Regenerator on board the burner |
| --- | --- | --- | --- | --- |
| Fluid preheating temperature/ fume inlet temperature | % | Max 80-81 | Max 74-75 | Max 90 |
| Efficiency | % | Max 86-87 | Max 85-86 | Max 90-91 |
| Power limit | KW | none | 500-600 | none |
| System control | / | none | none | Inversion valves |

Fig. 8

EP 3 749 896 B2

EP 3 749 896 B2

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017067634 A
- US 2014262174 A
- US 8622736 B
- US 4877396 A
- DE 1551761
- JP S61280309 B
- WO 2017052798 A1
- US 20160131441 A1
- WO 2017008108 A1
- US 20170082371 A1
- US 5725051 A
- US 2013264031 A
- US 2005217837 A
- WO 2014152239 A